# EUROPEAN PATENT APPLICATION

(11) **EP 4 293 746 A1**
(43) Date of publication of application: **20.12.2023**
(21) Application number: 22930176.7
(22) Date of filing: 01.04.2022
(51) Int. Cl.: H01M 4/136, H01M 10/0525

(54) **POSITIVE ELECTRODE ACTIVE MATERIAL AND PREPARATION METHOD THEREFOR, POSITIVE ELECTRODE PLATE COMPRISING SAME, SECONDARY BATTERY AND ELECTRIC DEVICE**

(71) Applicant: Contemporary Amperex Technology Co., Limited, Ningde City, Fujian 352100 (CN)
(72) Inventor: MA, Qingyan, Ningde, Fujian 352100 (CN); ZHAO, Yuzhen, Ningde, Fujian 352100 (CN); GUAN, Yingjie, Ningde, Fujian 352100 (CN); WEN, Yan, Ningde, Fujian 352100 (CN); HUANG, Qisen, Ningde, Fujian 352100 (CN)
(74) Representative: Gong, Jinping
(86) International application number: PCT/CN2022/084855
(87) International publication number: WO 2023/184494

(57) **Abstract**

A positive electrode active material, a method for the preparation thereof and a positive electrode plate, a secondary battery and an electrical device containing the same are provided. The positive electrode active material has a core-shell structure, comprising a core and a cladding layer covering at least a portion of said core, wherein said core has a chemical formula of LiₐAₓMn_{1-y}B_{y}P_{1-z}C_{z}C₄₋ₙDₙ, said cladding layer comprises a polymer containing an electron withdrawing group. The positive electrode active material of the present application enables a secondary battery to have a relatively high energy density, while further having a significantly improved rate performance, cycling performance and/or high-temperature stability.

## Description

### TECHNICAL FIELD

The present application belongs to the technical field of battery, in particular to a positive electrode active material, a method for the preparation thereof and a positive electrode plate, a secondary battery and an electrical device containing the same.

### BACKGROUND

In recent years, secondary batteries have been widely used in energy storage power systems such as hydro, thermal, wind and solar power plants, as well as electric tools, electric bicycles, electric motorcycles, electric vehicles, military equipment, aerospace and many other fields. With the application and promotion of secondary batteries, their safety performances are receiving more and more attention. Lithium manganese phosphate has become one of the most popular positive electrode active materials due to its high capacity, good safety performance and abundant raw material sources, however, lithium manganese phosphate is prone to manganese ion leaching out during charging, resulting in rapid capacity decay. Therefore, it is necessary to provide a positive electrode active material with good overall performance.

### SUMMARY

An object of the present application is to provide a positive electrode active material, a method for the preparation thereof, and a positive electrode plate, a secondary battery and an electrical device comprising the same, which material enables the secondary battery to have a relatively high energy density, while further having a significantly improved rate performance, cycling performance and/or high-temperature stability.

A first aspect of the present application provides a positive electrode active material having a core-shell structure, comprising a core and a cladding layer covering at least a portion of said core, wherein said core has a chemical formula of LiₐAₓMn_{1-y}B_{y}P_{1-z}C_{z}O₄₋ₙDₙ, said A comprises one or more elements selected from Zn, Al, Na, K, Mg, Nb, Mo and W, said B comprises one or more elements selected from Ti, V, Zr, Fe, Ni, Mg, Co, Ga, Sn, Sb, Nb, and Ge, said C comprises one or more elements selected from B (boron), S, Si, and N, said D comprises one or more elements selected from S, F, Cl, and Br, said a is in the range of 0.9 to 1.1, said x is in the range of 0.001 to 0.1, said y is in the range of 0.001 to 0.5, said z is in the range of 0.001 to 0.1, said n is in the range of 0.001 to 0.1, and said core is electrically neutral; said cladding layer comprises a polymer containing an electron withdrawing group.

In the present application, by doping the compound LiMnPO₄ with specific elements in specific amounts at Li, Mn, P and O sites at the same time, it is allowed to obtain improved rate performance while reducing the leaching out of Mn and Mn-site doping elements, thereby obtaining improved cycling performance and/or high-temperature stability, and the capacity per gram (also referred to as "gram capacity") and compaction density of the positive electrode active material can also be improved. The present application is able to significantly reduce the leaching out of Mn and Mn-site doping elements by applying a cladding layer to the surface of the core, and thus is able to obtain significantly improved cycling performance and/or high-temperature stability.

In any embodiment of the present application, said electron withdrawing group comprises one or more selected from halogen atoms, -CN, -COOH, -SO₃H, carboxylate groups, sulfonate groups, amide groups, sulfonyl groups, alkoxy groups, phosphoric acid groups, phosphorous acid groups, phosphate groups, and phosphite groups. These electron withdrawing groups are able to stabilize Mn³⁺ on the surface of the core material, thus significantly reducing the leaching out of Mn and Mn-site doping elements.

In any embodiment of the present application, said polymer comprises a monomer unit shown in Formula 1 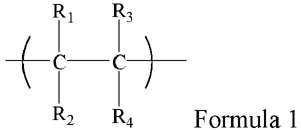 R₁, R₂, R₃, and R₄ each independently represent H, an electron withdrawing group, and an unsubstituted or an electron withdrawing group-substituted group selected from the group consisting of C1 to C20 alkyl, C1 to C20 alkoxy, C2 to C20 alkenyl, C2 to C20 alkynyl, and C6 to C20 aryl, and at least one of R₁, R₂, R₃, and R₄ represents an electron withdrawing group, or an electron withdrawing group-substituted group selected from the group consisting of C1 to C20 alkyl, C1 to C20 alkoxy, C2 to C20 alkenyl, C2 to C20 alkynyl, and C6 to C20 aryl.

In any embodiment of the present application, said polymer comprises one or more of a homopolymer formed by one kind of monomer unit shown in Formula 1, a copolymer formed by at least two kinds of monomer units shown in Formula 1, and a copolymer formed by at least one kind of monomer unit shown in Formula 1 and at least one ethylenically unsaturated monomer unit. Optionally, said ethylenically unsaturated monomer unit comprises one or more of styrene, ethylene, propylene, and butadiene.

In any embodiment of the present application, said polymer comprises one or more selected from homopolymers or copolymers of acrylate monomers; polyacrylonitrile; polyacrylamide; copolymers of acrylate monomers and ethylenically unsaturated monomers; copolymers of acrylonitrile and ethylenically unsaturated monomers; copolymers of acrylamide and ethylenically unsaturated monomers; copolymers of acrylate monomers and acrylonitrile; copolymers of acrylate monomers and acrylamide; copolymers of acrylonitrile and acrylamide; copolymers of acrylate monomers, acrylonitrile and acrylamide; copolymers of acrylate monomers, acrylonitrile, acrylamide, and ethylenically unsaturated monomers; halogen-substituted polyolefin; polystyrene malonic acid; polystyrene phosphorous acid; poly(2-acrylamido-2-methyl-1-propanesulfonic acid); nitrile rubber; mercaptan resin; and polyacrylic acid mercaptan resin.

Optionally, said acrylate monomer comprises one or more selected from acrylic acid, methacrylic acid, methyl acrylate, ethyl acrylate, methyl methacrylate, ethyl methacrylate, butyl methacrylate, and cyanoacrylate.

Optionally, said halogen-substituted polyolefin comprises one or more selected from polyvinylidene fluoride, tetrafluoroethylene-ethylene copolymer, polyvinylidene chloride, and polychloromethylstyrene.

In any embodiment of the present application, said polymer has a number average molecular weight of 10,000 to 300,000, optionally of 15,000 to 250,000. The number average molecular weight of the polymer within the suitable ranges further allows the positive electrode active material to have both good kinetic performance and high-temperature stability.

In any embodiment of the present application, said electron withdrawing group is present in a mass percentage α in said polymer, with α being from 20% to 70%, optionally from 35% to 65%. The content of electron withdrawing group in the polymer within in the suitable ranges allows better cladding modification effect on the core.

In any embodiment of the present application, said cladding layer is present in an amount of greater than 0 wt% and less than or equal to 15 wt%, optionally greater than 0 wt% and less than or equal to 8 wt%, more optionally greater than 0 wt% and less than or equal to 3 wt%, based on the weight of said core. The amount of cladding layer within the suitable ranges allows better cladding modification effect on the core.

In any embodiment of the present application, said cladding layer has a coverage of 60% to 100%, optionally 70% to 85%, on the surface of said core. The coverage of the cladding layer on the surface of the core within the suitable ranges allows better cladding modification effect on the core, thereby further improving the cycling performance and/or high-temperature stability of batteries.

In any embodiment of the present application, each of said A, C and D is independently any one element in the above-mentioned respective range, and said B is at least two elements in the above-mentioned range.

Optionally, said A is any one element selected from Mg and Nb.

Optionally, said B is at least two elements selected from Fe, Ti, V, Co and Mg, further being the combination of Fe with one or more element selected from Ti, V, Co and Mg.

Optionally, said C is S.

Optionally, said D is F.

This enables further improvement of the rate performance, energy density and/or high-temperature stability of batteries.

In any embodiment of the present application, said x is selected from the range of 0.001 to 0.005. As a result, the kinetic performance of the positive electrode active material can be further improved.

In any embodiment of the present application, said y is selected from the range of 0.01 to 0.5, optionally from the range of 0.25 to 0.5. As a result, the gram capacity and rate performance of the positive active material can be further improved.

In any embodiment of the present application, said z is selected from the range of 0.001 to 0.005. As a result, the rate performance of batteries can be further improved.

In any embodiment of the present application, said n is selected from the range of 0.001 to 0.005. As a result, the high-temperature stability of batteries can be further improved.

In any embodiment of the present application, the ratio of (1-y):y is in the range of 1 to 4, optionally in the range of 1.5 to 3, and the ratio of a:x is in the range of 9 to 1100, optionally in the range of 190 to 998. As a result, the energy density and cycling performance of batteries can be further improved.

In any embodiment of the present application, said positive electrode active material has a lattice change rate of 8% or less, optionally 4% or less. As a result, the rate performance of batteries can be improved.

In any embodiment of the present application, said positive electrode active material has a Li/Mn anti-site defect concentration of 2% or less, optionally 0.5% or less. As a result, the gram capacity and rate performance of the positive electrode active material can be improved.

In any embodiment of the present application, said positive electrode active material has a surface oxygen valence of -1.82 or less, optionally -1.89 to -1.98. Thus, the cycling performance and high-temperature stability of batteries can be improved.

In any embodiment of the present application, said positive electrode active material has a compaction density of 2.0 g/cm³ or more, optionally 2.2 g/cm³ or more, at 3T. As a result, the bulk energy density of batteries can be increased.

A second aspect of the present application provides a method for preparing a positive electrode active material, comprising
Step (1), dissolving a manganese source, a source of element B and an acid in a solvent and stirring to produce a suspension of a manganese salt doped with element B, filtering the suspension and drying the resulting filter cake to obtain the manganese salt doped with element B;
Step (2), adding a lithium source, a phosphorus source, a source of element A, a source of element C and a source of element D, a solvent and the manganese salt doped with element B obtained from step (1) to a reaction vessel for grinding and mixing to obtain a slurry;
Step (3), transferring the slurry obtained from step (2) to a spray drying equipment for spray drying and granulating to obtain granules;
Step (4), sintering the granules obtained from step (3) to obtain a core;
Step (5), mixing the core obtained from step (4) with a solution of a polymer containing an electron withdrawing group homogeneously and then drying to obtain the positive electrode active material,
wherein the positive electrode active material has a core-shell structure, comprising a core and a cladding layer covering at least a portion of said core,
in which said core has a chemical formula of LiₐAₓMn_{1-y}B_{y}P_{1-z}C_{z}O₄₋ₙDₙ, wherein said A comprises one or more elements selected from Zn, Al, Na, K, Mg, Nb, Mo and W, said B comprises one or more elements selected from Ti, V, Zr, Fe, Ni, Mg, Co, Ga, Sn, Sb, Nb, and Ge, said C comprises one or more elements selected from B (boron), S, Si, and N, said D comprises one or more elements selected from S, F, Cl, and Br, said a is in the range of 0.9 to 1.1, said x is in the range of 0.001 to 0.1, said y is in the range of 0.001 to 0.5, said z is in the range of 0.001 to 0.1, said n is in the range of 0.001 to 0.1, and said core is electrically neutral; and
said cladding layer comprises the polymer containing an electron withdrawing group.

In any embodiment of the present application, the source of element A is at least one selected from elemental substance, oxides, phosphates, oxalates, carbonates and sulfates of element A, the source of element B is at least one selected from elemental substance, oxides, phosphates, oxalates, carbonates and sulfates of element B, the source of element C is at least one selected from sulfates, borates, nitrates and silicates of element C, the source of element D is at least one selected from elemental substance and ammonium salts of element D. As a result, the performance of the positive electrode active material can be improved by selecting the source of each doping element within the above corresponding range.

In any embodiment of the present application, stirring in said step (1) is carried out at a temperature in the range of 60-120°C.

In any embodiment of the present application, stirring in said step (1) is carried out by stirring at a rate of 200-800 rpm.

In any embodiment of the present application, grinding and mixing in said step (2) are carried out for 8-15 hours.

Thus, by controlling the reaction temperature, stirring rate and mixing time during doping, uniform distribution of doping elements and higher crystallinity of the material after sintering can be achieved, and thus the gram capacity and rate performance of the positive electrode active material can be improved.

In any embodiment of the present application, the sintering in said step (4) is carried out at a temperature in the range of 600-900°C for 6-14 hours. As a result, the high-temperature stability and cycling performance of batteries can be improved.

A third aspect of the present application provides a positive electrode plate comprising a positive electrode current collector and a positive electrode film provided on at least one surface of the positive electrode current collector, wherein said positive electrode film comprises the positive electrode active material of the first aspect of the present application or the positive electrode active material prepared by the method of the second aspect of the present application, and said positive electrode active material is present in said positive electrode film layer in a content of 10 wt% or more.

In any embodiment of the present application, said positive electrode active material is present in said positive electrode film in a content of 95-99.5 wt%, based on the total weight of said positive electrode film. When the content of said positive electrode active material is within the above-mentioned range, it is conducive to fully utilizing the advantages of the positive electrode active material of the present application.

A fourth aspect of the present application provides a secondary battery comprising the positive electrode active material of the first aspect of the present application, or the positive electrode active material prepared by the method of the second aspect of the present application, or the positive electrode plate of the third aspect of the present application.

A fifth aspect of the present application provides an electrical device comprising the secondary battery of the fourth aspect of the present application.

The positive electrode plate, the secondary battery, and the electrical device of the present application include the positive electrode active material of the present application, and thus have at least the same advantages as said positive electrode active material.

### DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on the accompanying drawings without creative work.
FIG. 1 is a schematic diagram of a secondary battery according to an embodiment of the present application.
FIG. 2 is an exploded view of a secondary battery according to the embodiment of the present application as shown in FIG. 1.
FIG. 3 is a schematic diagram of a battery module according to an embodiment of the present application.
FIG. 4 is a schematic diagram of a battery pack according to an embodiment of the present application.
FIG. 5 is an exploded view of the battery pack according to the embodiment of the present application as shown in FIG. 4.
FIG. 6 is a schematic diagram of an electrical device according to an embodiment of the present application using the secondary battery of the present application as power.
FIG. 7 illustrates an X-ray diffraction (XRD) of the undoped LiMnPO₄ and the core of the positive electrode active material prepared in Example 2.
FIG. 8 illustrates an X-ray energy dispersive spectroscopy (EDS) of the core of the positive electrode active material prepared in Example 2.

In the drawings, the accompanying drawings are not necessarily drawn to an actual scale. Among them, the reference sings in the accompanying drawings are illustrated as follows: 1 - battery pack, 2 - upper case, 3 - lower case, 4 - battery module, 5 - secondary battery, 51 - housing, 52 - electrode assembly, and 53- cover plate.

### DETAILED DESCRIPTION

Hereinafter, embodiments of the positive electrode active material, the method for the preparation thereof, the positive electrode plate, the secondary battery, and the electrical device containing the same will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such technical solution should be considered to be included in the disclosure of the present application.

Unless stated otherwise, all technical features and optional technical features of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise", "comprising", "contain" and "containing" mentioned in the present application mean that it is drafted in an open mode, or it may also mean a close mode. For example, the transition phases "comprise", "comprising", "contain" and "containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

In the present application, an "approximate" value indicates a range of that the specified value ± 10%.

It should be noted that as used herein, the term "cladding layer" refers to a layer of material that covers the core of lithium manganese phosphate, and that said layer of material may completely or partially cover the core of lithium manganese phosphate, and that the term "cladding layer" is used for descriptive purposes only and is not intended to limit the present invention.

As used herein, the term "copolymer" may be a binary copolymer or multiple copolymer.

As used herein, the term "acrylate monomers" denotes a generic term for esters of acrylic acid, methacrylic acid and their homologues.

The inventors of the present application have deeply studied the effects of doping of lithium manganese phosphate with various elements at Li, Mn, P and O sites and found that by doping with specific elements in specific amounts at the above four sites and coating with a cladding layer, the significantly improved rate performance, cycling performance and high-temperature stability can be obtained, resulting in an improved lithium manganese phosphate positive electrode active material.

### Positive electrode active material

Specifically, a first aspect of the present application provides a positive electrode active material having a core-shell structure, comprising a core and a cladding layer covering at least a portion of said core, wherein said core has a chemical formula of LiₐAₓMn_{1-y}B_{y}P_{1-z}C_{z}O₄₋ₙDₙ, wherein said A comprises one or more elements selected from Zn, Al, Na, K, Mg, Nb, Mo and W, said B comprises one or more elements selected from Ti, V, Zr, Fe, Ni, Mg, Co, Ga, Sn, Sb, Nb, and Ge, said C comprises one or more elements selected from B (boron), S, Si, and N, said D comprises one or more elements selected from S, F, Cl, and Br, said a is in the range of 0.9 to 1.1, said x is in the range of 0.001 to 0.1, said y is in the range of 0.001 to 0.5, said z is in the range of 0.001 to 0.1, said n is in the range of 0.001 to 0.1, and said core is electrically neutral; said cladding layer comprises a polymer containing an electron withdrawing group.

Unless otherwise stated, in the above chemical formula, when A represents more than two elements, the above range for the x value is not only for the stoichiometric number of each element as A, but also for the sum of the stoichiometric numbers of each element as A. For example, when A represents more than two elements A1, A2 ...... and An, each of the respective stoichiometric numbers x1, x2 ......and xn of respective A1, A2 ......and An must fall within the numerical range defined by the present application for x, and the sum of x1, x2...... and xn must also fall within such numerical range of the present application. Similarly, in the case where B, C and D are more than two elements, the limitations on numerical ranges for the stoichiometric numbers of B, C and D in the present application also have the above meaning.

The core of the positive electrode active material of the present application is obtained by doping the compound LiMnPO₄ with various elements, wherein A, B, C and D are elements for doping at the Li, Mn, P and O sites of the compound LiMnPO₄, respectively. Without wishing to be bound by theory, it is now believed that the improvement of performances of lithium manganese phosphate is related to the reduction of the lattice change rate of lithium manganese phosphate in the process of intercalation and de-intercalation of lithium ions and the reduction of surface activity. The reduction of the lattice change rate can reduce the difference in lattice constants between two phases at the grain boundary, reduce the interfacial stress, enhance the Li⁺ transport at the interface, and thus improve the rate performance of the positive electrode active material. High surface activity tends to lead to serious interfacial side reactions, which intensify gas production, electrolyte consumption and interface damage, thus affecting the cycling performance of batteries. In this application, the lattice change rate is reduced by doping at Li and Mn sites. The Mn-site doping also effectively reduces the surface activity, thus inhibiting the leaching out of manganese ion and the interfacial side reactions between the positive electrode active material and the electrolyte. The P-site doping results in a faster change rate of Mn-O bond length and reduces migration barrier of small polaron of the material, thus contributing to the enhancement of electronic conductivity. The O-site doping has a good effect on reducing the interfacial side reactions. The doping at the P- and O-sites also has an effect on the leaching out of manganese ion and kinetic properties of the anti-site defects.

Thus, doping reduces the concentration of anti-site defects in the positive electrode active material, improves the kinetic performance and gram capacity of the positive electrode active material, and also changes the morphology of particles, thus enhancing the compaction density. The inventors of the present application unexpectedly found that by doping the compound LiMnPO₄ with specific elements in specific amounts at Li, Mn, P and O sites at the same time, it is allowed to obtain improved rate performance while reducing the leaching out of Mn and Mn-site doping elements, thereby obtaining improved cycling performance and/or high-temperature stability, and the gram capacity and compaction density of the positive electrode active material can also be improved. Optionally, said A is one or more elements selected from Zn, Al, Na, K, Mg, Nb, Mo and W, said B is one or more elements selected from Ti, V, Zr, Fe, Ni, Mg, Co, Ga, Sn, Sb, Nb and Ge, said C is one or more elements selected from B (boron), S, Si and N, and said D is one or more elements selected from S, F, Cl and Br.

A cladding layer is disposed on the surface of the core, and can separate materials of the core from an electrolytic solution to avoid direct contact between the materials of the core and the electrolytic solution and to reduce interfacial side reactions. The cladding layer of this application includes a polymer containing an electron withdrawing group that can stabilize Mn³⁺ on the surface of the core material, thus significantly reducing the leaching out of Mn and Mn-site doping elements. Thus, the cladding layer on the surface of the core can significantly reduce the leaching out of Mn and Mn-site doping elements, thus enabling significantly improved cycling performance and/or high-temperature stability. Optionally, said electron withdrawing group comprises one or more selected from halogen atoms, -CN, -COOH, -SO₃H, carboxylate groups, sulfonate groups, amide groups, sulfonyl groups, alkoxy groups, phosphoric acid groups, phosphorous acid groups, phosphate groups, and phosphite groups.

It should be noted that the XRD spectra before and after the doping of LiMnPO₄ in this application reveal that the positions of the primary characteristic peaks of the positive electrode active material of this application are basically the same as those before the doping of LiMnPO₄, indicating that the doped lithium manganese phosphate positive electrode active material has no impurity phase and the improvement of battery performances is mainly caused by the doping of elements rather than by the impurity phase.

In some embodiments, each of said A, C and D is independently any one element in the above-mentioned respective range, and said B is at least two elements in the above-mentioned range. This enables easier and more accurate control of the composition of the core of the positive electrode active material.

Optionally, said A is any one element selected from Mg and Nb.

Optionally, said B is at least two elements selected from Fe, Ti, V, Co and Mg, optionally being Fe with more than one element selected from Ti, V, Co and Mg.

Optionally, said C is S.

Optionally, said D is F.

By selecting the Li-site doping element within the above range, the lattice change rate during the de-intercalation process can be further reduced, thereby further improving the rate performance of batteries. By selecting the Mn-site doping element in the above range, the electronic conductivity can be further improved and the lattice change rate can be further reduced, thus improving the rate performance and energy density of batteries. By selecting the P-site doping element in the above range, the rate performance of batteries can be further improved. By selecting the O-site doping element in the above range, the side reactions at the interface can be further reduced and the high-temperature stability of batteries can be improved.

Said a is selected from the range of 0.9 to 1.1, for example, 0.97, 0.977, 0.984, 0.988, 0.99, 0.991, 0.992, 0.993, 0.994, 0.995, 0.996, 0.997, 0.998, and 1.01.

Said x is selected from the range of 0.001 to 0.1, for example, 0.001, and 0.005.

Said y is selected from the range of 0.001 to 0.5, such as 0.001, 0.005, 0.02, 0.05, 0.1, 0.15, 0.2, 0.25, 0.3, 0.34, 0.345, 0.349, 0.35, and 0.4.

Said z is selected from a range of 0.001 to 0.1, such as 0.001, 0.005, 0.08, and 0.1, and said n is selected from a range of 0.001 to 0.1, such as 0.001, 0.005, 0.08, and 0.1.

In some embodiments, said x is selected from the range of 0.001 to 0.005.

In some embodiments, said y is selected from a range of 0.01 to 0.5, optionally from a range of 0.25 to 0.5.

In some embodiments, said z is selected from the range of 0.001 to 0.005.

In some embodiments, said n is selected from the range of 0.001 to 0.005.

The kinetic performance of the positive electrode active material can be further enhanced by selecting the x value within the above range. The gram capacity and rate performance of the positive electrode active material can be further enhanced by selecting the y value within the above range. By selecting the z value within the above range, the rate performance of batteries can be further improved. The high-temperature stability of batteries can be further improved by selecting the n value within the above range.

In some embodiments of the present application, the core of the positive electrode active material satisfies the ratio of (1-y):y within the range of 1 to 4, optionally in the range of 1.5 to 3, and the ratio of a:x within the range of 9 to 1100, optionally in the range of 190 to 998. Here y denotes the sum of the stoichiometric numbers of the Mn-site doping elements. The energy density and cycling performance of batteries can be further improved when the above conditions are satisfied.

In some embodiments of the present application, said polymer comprises a monomer unit shown in Formula 1 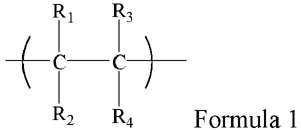 R₁, R₂, R₃, and R₄ each independently represent H, an electron withdrawing group, and an unsubstituted or an electron withdrawing group-substituted group selected from the group consisting of C1 to C20 alkyl, C1 to C20 alkoxy, C2 to C20 alkenyl, C2 to C20 alkynyl, and C6 to C20 aryl, and at least one of R₁, R₂, R₃, and R₄ represents an electron withdrawing group, or an electron withdrawing group-substituted group selected from the group consisting of C1 to C20 alkyl, C1 to C20 alkoxy, C2 to C20 alkenyl, C2 to C20 alkynyl, and C6 to C20 aryl.

In some embodiments of the present application, said polymer comprises one or more of a homopolymer formed by one kind of monomer unit shown in Formula 1, a copolymer formed by at least two kinds of monomer units shown in Formula 1, and a copolymer formed by at least one kind of monomer unit shown in Formula 1 and at least one ethylenically unsaturated monomer unit.

Optionally, said ethylenically unsaturated monomer unit comprises one or more of styrene, ethylene, propylene, and butadiene.

As an example, said polymer comprises one or more selected from homopolymers or copolymers of acrylate monomers; polyacrylonitrile; polyacrylamide; copolymers of acrylate monomers and ethylenically unsaturated monomers; copolymers of acrylonitrile and ethylenically unsaturated monomers; copolymers of acrylamide and ethylenically unsaturated monomers; copolymers of acrylate monomers and acrylonitrile; copolymers of acrylate monomers and acrylamide; copolymers of acrylonitrile and acrylamide; copolymers of acrylate monomers, acrylonitrile and acrylamide; copolymers of acrylate monomers, acrylonitrile, acrylamide, and ethylenically unsaturated monomers; halogen-substituted polyolefin; polystyrene malonic acid; polystyrene phosphorous acid; poly(2-acrylamido-2-methyl-1-propanesulfonic acid); nitrile rubber; mercaptan resin; and polyacrylic acid mercaptan resin.

Optionally, said acrylate monomers comprise one or more selected from acrylic acid, methacrylic acid, methyl acrylate, ethyl acrylate, methyl methacrylate, ethyl methacrylate, butyl methacrylate, and cyanoacrylate.

Optionally, said halogen-substituted polyolefin comprises one or more selected from polyvinylidene fluoride, tetrafluoroethylene-ethylene copolymer, polyvinylidene chloride, and polychloromethylstyrene.

In some embodiments of the present application, said polymer has a number average molecular weight of 10,000 to 300,000, for example it may be 15,000 to 250,000, 15,000 to 200,000, 15,000 to 180,000, 50,000 to 250,000, 50,000 to 200,000, 50,000 to 180,000. The number average molecular weight of the polymer may be determined by methods known in the art, such as by gel permeation chromatography (GPC). A PL-GPC 220 high temperature gel permeation chromatograph may be used for testing.

When the number average molecular weight of the polymer is within the suitable ranges, it is also possible to combine good kinetic properties and high-temperature stability of the positive electrode active material. In addition, the following conditions may be effectively avoided: if the number average molecular weight of the polymer is too small, the film formation effect on the surface of core may be poor, and the cladding modification effect on the core may not be observed, and the effect of isolating the electrolyte and the core may be poor; and if the number average molecular weight of the polymer is too high, the force between polymers may be too strong, and the positive electrode active material may be easily agglomerated, which may reduce kinetic performance of the positive electrode active material, and may also lead to poor cladding effect, for example, the cladding layer tends to be uneven in thickness.

In some embodiments, said electron withdrawing group is present in a mass percentage α in said polymer, with α being from 20% to 70%, optionally from 35% to 65%. The mass percentage of the electron withdrawing groups in the polymer may be determined by methods known in the art, such as by titration (e.g. acid-base titration, redox titration, precipitation titration), infrared spectroscopy, nuclear magnetic resonance spectroscopy.

The content of electron withdrawing group in the polymer within in the suitable ranges allows better cladding modification effect on the core. In addition, the following conditions may be effectively avoided: if the content of electron withdrawing group in the polymer is too high, the force between polymers may be too strong, and the positive electrode active material may be easily agglomerated, which may reduce kinetic performance of the positive electrode active material; if the content of electron withdrawing group in the polymer is too low, its effect on reducing the leaching out of Mn and Mn-site doping elements may be poor.

In some embodiments, said cladding layer is present in an amount of greater than 0 and less than or equal to 15 wt%, optionally greater than 0 and less than or equal to 8 wt%, more optionally greater than 0 and less than or equal to 3 wt%, based on the weight of said core.

The amount of cladding layer within the suitable ranges allows better cladding modification effect on the core. In addition, the following conditions may be effectively avoided: if the amount of the cladding layer is too low, the effect of cladding modification on the core may not be observed; if the amount of the cladding layer is too high, electronic conductivity and ionic conductivity of the positive active material may deteriorate and battery impedance may increase, which may affect rate performance and cycling performance of batteries.

In some embodiments, said cladding layer has a coverage of 60% to 100%, optionally 70% to 85%, on the surface of said core. The coverage of the cladding layer on the surface of the core within the suitable ranges allows better cladding modification effect on the core, thereby further improving cycling performance and/or high-temperature stability of batteries.

In some embodiments, said positive electrode active material has a lattice change rate of 8% or less, and optionally, the lattice change rate is 4% or less. By reducing the lattice change rate, it allows easier Li ion transport, i.e., Li ions have stronger migration ability in the material, which is conducive to improving the rate performance of batteries. The lattice change rate can be measured by methods known in the art, such as X-ray diffraction mapping (XRD).

In some embodiments, said positive electrode active material has a Li/Mn anti-site defect concentration of 2% or less, optionally the Li/Mn anti-site defect concentration is 0.5% or less. The term Li/Mn anti-site defect refers to interchange of Li⁺ with Mn²⁺ in terms of its site in the LiMnPO₄ lattice. The Li/Mn anti-site defect concentration refers to a percentage of Li⁺ interchanged with Mn²⁺ in the positive electrode active material relative to the total amount of Li⁺. The Mn²⁺ ion having an anti-site defect hinders transport of Li⁺, and by reducing the Li/Mn anti-site defect concentration, it is conducive to improving gram capacity and rate performance of the positive active material. The Li/Mn anti-site defect concentration can be measured by methods known in the art, such as XRD.

In some embodiments, said positive electrode active material has a surface oxygen valence of -1.82 or less, optionally -1.89 to -1.98. By reducing the surface oxygen valence, interfacial side reactions between a positive electrode active material and an electrolytic solution can be mitigated, thereby improving cycling performance and high-temperature stability of batteries. The surface oxygen valence can be measured by methods known in the art, such as by electron energy loss spectroscopy (EELS).

In some embodiments, said positive electrode active material has a compaction density of 2.0 g/cm³ or more, optionally 2.2 g/cm³ or more, at 3T (tonne). The higher the compaction density is, the greater the weight of the positive electrode active material per unit volume is. Thus, increase of the compaction density is conducive to improving volumetric energy density of batteries. Compaction density can be measured according to GB/T 24533-2009.

### Preparation method

A second aspect of the present application provides a method for preparing the positive electrode active material according to the first aspect, comprising
Step (1), dissolving a manganese source, a source of element B and an acid in a solvent and stirring them to produce a suspension of a manganese salt doped with element B, filtering the suspension and drying the resulting filter cake to obtain the manganese salt doped with element B;
Step (2), adding a lithium source, a phosphorus source, a source of element A, a source of element C and a source of element D, a solvent and the manganese salt doped with element B obtained from step (1) to a reaction vessel for grinding and mixing to obtain a slurry;
Step (3), transferring the slurry obtained from step (2) to a spray drying equipment for spray drying and granulating to obtain granules;
Step (4), sintering the granules obtained from step (3) to obtain a core;
Step (5), mixing the core obtained from step (4) with a solution of a polymer containing an electron withdrawing group homogeneously and then drying to obtain the positive electrode active material,
wherein the positive electrode active material has a core-shell structure, comprising a core and a cladding layer covering at least a portion of said core.

In some embodiments, the source of element A is at least one selected from elemental substance, oxides, phosphates, oxalates, carbonates and sulfates of element A, the source of element B is at least one selected from elemental substance, oxides, phosphates, oxalates, carbonates and sulfates of element B, the source of element C is at least one selected from sulfates, borates, nitrates and silicates of element C, the source of element D is at least one selected from elemental substance and ammonium salts of element D. By selecting the source of each doping element, it is possible to improve distribution uniformity of doping elements, thereby improving performances of the positive electrode active material.

In some embodiments, said acid is one or more selected from hydrochloric acid, sulfuric acid, nitric acid, phosphoric acid, organic acids such as oxalic acid, and the like, which may be oxalic acid, for example. In some embodiments, said acid is a diluted acid with a concentration of 60 wt% or less.

In some embodiments, said manganese source may be a manganese-containing substance known in the art that can be used to prepare lithium manganese phosphate. For example, said manganese source may be one or more selected from elemental manganese, manganese dioxide, manganese phosphate, manganese oxalate, and manganese carbonate.

In some embodiments, said lithium source may be a lithium-containing substance known in the art that can be used to prepare lithium manganese phosphate. For example, said lithium source may be one or more selected from lithium carbonate, lithium hydroxide, lithium phosphate, and lithium dihydrogen phosphate.

In some embodiments, said phosphorus source may be a phosphorus-containing substance known in the art that can be used to prepare lithium manganese phosphate. For example, said phosphorus source may be one or more selected from diammonium hydrogen phosphate, ammonium dihydrogen phosphate, ammonium phosphate and phosphoric acid.

The addition amounts of respective sources of elements A, B, C, and D depends on the target doping amounts, and the ratio of amounts of the lithium, manganese, and phosphorus sources conforms to a stoichiometric ratio.

In some embodiments, the solvents described in step (1) and step (2) may each independently be solvents routinely used by those skilled in the art in the preparation of manganese salts and lithium manganese phosphate, and for example, they may each independently be selected from at least one of ethanol, water (such as deionized water), and the like.

In some embodiments, stirring in step (1) is carried out at a temperature in the range of 60-120°C. In some embodiments, stirring in step (1) is carried out at a rate of 200-800 rpm, or 300-800 rpm, or 400-800 rpm. In some embodiments, stirring in step (1) is carried out for 6-12 hours. In some embodiments, grinding and mixing in step (2) are carried out for 8-15 hours.

By controlling the reaction temperature, stirring rate and mixing time during doping, uniform distribution of doping elements and higher crystallinity of materials after sintering can be achieved, which can enhance gram capacity and rate performance of the positive electrode active material.

In some embodiments, the filter cake in step (1) may be washed prior to drying the filter cake.

In some embodiments, drying in step (1) may be performed in a manner and under a condition known to those skilled in the art. For example, the drying may be carried out at a temperature in the range of 120-300°C. Optionally, the filter cake may be ground into particles after drying, for example, into particles having a median particle size Dv₅₀ in the range of 50-200 nm. The median particle size Dv₅₀ refers to a particle size at which said material has a cumulative volume distribution percentage of 50%. In the present application, the median particle size Dv₅₀ of said material can be determined by laser diffraction particle size analysis. For example with reference to standard GB/T 19077-2016, a laser particle size analyzer (e.g. Malvern Master Size 3000) may be used for determination.

The temperature and time of spray drying in step (3) may be the temperature and time routinely used in the art for performing spray drying, e.g., 1-6 hours at 100-300°C.

In some embodiments, sintering in step (4) is carried out at a temperature in the range of 600-900°C for 6-14 hours. By controlling the sintering temperature and time, it is possible to control crystallinity of the positive electrode active material and reduce the amount of leaching out of Mn and Mn-site doping elements after cycling of the positive electrode active material, thereby improving high-temperature stability and cycling performance of batteries.

In some embodiments, sintering in step (4) is carried out under a protective atmosphere, wherein said protective atmosphere may be nitrogen, inert gas, hydrogen or a mixture thereof.

In some embodiments, drying in step (5) can be performed at a temperature in the range of 50°C to 160°C, optionally of 60°C to 150°C, more optionally of 70°C to 140°C, even more optionally of 80°C to 130°C, most optionally of 90°C to 120°C, and the drying can be carried out for a period of 3-9 hours, optionally of 4-8 hours, more optionally of 5-7 hours, most optionally about 6 hours.

### Positive electrode plate

A third aspect of the present application provides a positive electrode plate comprising a positive electrode current collector and a positive electrode film provided on at least one surface of the positive electrode current collector, wherein said positive electrode film comprises the positive electrode active material of the first aspect of the present application or the positive electrode active material prepared by the method of the second aspect of the present application, and said positive electrode active material is present in said positive electrode film layer in a content of 10 wt% or more, based on the total weight of the positive electrode film.

Said positive electrode current collector has two surfaces opposite to each other in the direction of its own thickness, and said positive electrode film is provided on either or both of two opposite surfaces of said positive electrode current collector.

In some embodiments, said positive electrode active material is present in said positive electrode film in a content of 95-99.5 wt%, based on the total weight of said positive electrode film. When the content of said positive electrode active material is within the above-mentioned range, it is conducive to fully exerting advantages of the positive electrode active material of the present application.

The positive electrode film does not exclude other positive electrode active materials than the positive electrode active material of the first aspect of the present application or the positive electrode active material prepared by the method of the second aspect of the present application. For example, the positive electrode film may also comprise at least one of a lithium transition metal oxide and a modified compound thereof. By way of example, said other positive electrode active materials may include at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof.

In some embodiments, said positive electrode film may further optionally comprise a positive conductive agent. In the present application, the type of said positive conductive agent is not particularly limited. As an example, said positive conductive agent comprises at least one of superconducting carbon, conductive graphite, acetylene black, carbon black, Ketjen black, carbon dots, carbon nanotubes, graphene, and carbon nanofibers.

In some embodiments, said positive electrode film may further optionally include a positive electrode binder. In the present application, the type of said positive electrode binder is not particularly limited and, as an example, said positive electrode binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, said positive electrode current collector may be a metal foil or a composite collector fluid. As an example of a metal foil, an aluminum foil may be used. The composite collector may include a polymeric material matrix and a metallic material layer formed on at least one surface of the polymeric material matrix. As an example, the metallic material may be selected from at least one of aluminum, aluminum alloy, nickel, nickel alloy, titanium, titanium alloy, silver, and silver alloy. As an example, the polymer material matrix may be selected from polypropylene (PP), polyethylene terephthalate (PET), polybutylene terephthalate (PBT), polystyrene (PS), polyethylene (PE), etc.

Said positive electrode film is usually made by applying a positive electrode slurry to the positive collector followed by drying and cold pressing. Said positive electrode slurry is usually formed by dispersing the positive active material, an optional conductive agent, an optional binder, and any other components in a solvent and stirring uniformly. The solvent may be N-methylpyrrolidone (NMP), but is not limited thereto.

### Secondary Battery

A fourth aspect of the present application provides a secondary battery comprising the positive electrode plate of the third aspect of the present application.

A secondary battery, also known as a rechargeable battery or accumulator, is a battery that can continue to be used by activating its active material by means of charging after the battery has been discharged. Typically, a secondary battery includes an electrode assembly and an electrolyte, and the electrode assembly includes a positive electrode plate, a negative electrode plate, and a separator. The separator is disposed between the positive electrode plate and the negative electrode plate, which mainly functions as preventing short circuit of the positive and negative electrodes and at the same time allowing active ions to pass through. The electrolyte functions as conducting active ions between the positive electrode plate and the negative electrode plate.

### [Positive electrode plate]

A positive electrode plate used in the secondary battery of this application is the positive electrode plate described in any one of embodiments of the third aspect of this application.

### [Negative electrode plate]

In some embodiments, said negative electrode plate comprises a negative electrode current collector and a negative electrode film provided on at least one surface of said negative electrode current collector and comprising a negative electrode active material. For example, said negative electrode current collector has two surfaces opposite to each other in the direction of its own thickness, and said negative electrode film is provided on either or both of two opposite surfaces of said negative electrode current collector.

Said negative electrode active material may be a negative electrode active material known in the art for use in secondary batteries. By way of example, said negative electrode active material includes, but is not limited to, at least one of natural graphite, artificial graphite, soft carbon, hard carbon, silicon-based material, tin-based material, and lithium titanate. Said silicon-based material may include at least one of elemental silicon, a silicon oxide, a silicon carbon composite, a silicon nitrogen composite, a silicon alloy material. Said tin-based materials may include at least one of elemental tin, a tin oxide, and a tin alloy material. The present application is not limited to these materials, and other conventionally known materials that can be used as negative electrode active materials for secondary batteries may also be used. These negative electrode active materials can be used alone, or in combination of two or more materials.

In some embodiments, said negative electrode film may also optionally comprise a negative conductive agent. In the present application, the type of said negative conductive agent is not particularly limited and, as an example, said negative conductive agent may include at least one of superconducting carbon, conductive graphite, acetylene black, carbon black, Ketjen black, carbon dots, carbon nanotubes, graphene, and carbon nanofibers.

In some embodiments, said negative electrode film may further optionally comprise a negative electrode binder. In the present application, the type of said negative binder is not particularly limited and, as an example, said negative electrode binder may include at least one of styrene-butadiene rubber (SBR), water-soluble unsaturated resin SR-1B, aqueous acrylic resins (e.g., polyacrylic acid PAA, polymethacrylic acid PMAA, polyacrylic acid sodium salt PAAS), polyacrylamide (PAM), polyvinyl alcohol (PVA), sodium alginate (SA), and carboxymethyl chitosan (CMCS).

In some embodiments, said negative electrode film may optionally also include other additives. As an example, the other additives may include thickeners, e.g., sodium carboxymethyl cellulose (CMC), and PTC thermistor material, etc.

In some embodiments, said negative electrode current collector may be a metal foil or a composite collector. As an example of a metal foil, a copper foil may be used. The composite collector may include a polymeric material matrix and a metallic material layer formed on at least one surface of the polymeric material matrix. As an example, the metallic material may be selected from at least one of copper, copper alloy, nickel, nickel alloy, titanium, titanium alloy, silver, and silver alloy. As an example, the polymer material matrix may be selected from polypropylene (PP), polyethylene terephthalate (PET), polybutylene terephthalate (PBT), polystyrene (PS), polyethylene (PE), etc.

Said negative electrode film is usually made by applying a negative electrode slurry to the negative electrode current collector followed by drying and cold pressing. Said negative electrode slurry is usually formed by dispersing the negative active material, an optional conductive agent, an optional binder, and any other optional additives in a solvent and stirring uniformly. The solvent may be N-methylpyrrolidone (NMP) and deionized water, but is not limited thereto.

Said negative electrode plate does not exclude other additional functional layers than said negative electrode film. For example, in some embodiments, the negative electrode plate described in the present application further comprises a conductive primer (e.g. being composed of a conductive agent and a binder) sandwiched between said negative electrode current collector and said negative electrode film and disposed on the surface of said negative electrode current collector. In some other embodiments, the negative electrode plate described in this application further comprises a protective layer covering the surface of said negative electrode film.

### [Electrolyte]

The type of electrolyte is not specifically restricted in the present application, and can be selected by those skilled in the art according to actual requirements. For example, the electrolyte may be at least one selected from solid electrolyte and liquid electrolyte (i.e., electrolytic solution).

In some embodiments, an electrolytic solution is used as the electrolyte. The electrolytic solution includes an electrolyte salt and a solvent.

The type of electrolyte salt is not specifically restricted in the present application, and can be selected by those skilled in the art according to actual requirements. In some embodiments, as an example, the electrolyte salt may comprise at least one of lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bis(trifluoromethane sulfonimide) (LiTFSI), lithium trifluoromethane sulfonate (LiTFS), lithium difluorooxalate borate (LiDFOB), lithium dioxalate borate (LiBOB), lithium difluorophosphate (LiPO₂F₂), lithium difluorodioxalate phosphate (LiDFOP) and lithium tetrafluorooxalate phosphate (LiTFOP).

The type of solvent is not specifically restricted in the present application, and can be selected by those skilled in the art according to actual requirements. In some embodiments, the solvent may comprise at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS) and diethyl sulfone (ESE).

In some embodiments, the electrolytic solution may also optionally include additives. For example, the additives may include negative electrode film-forming additives, and may include positive electrode film-forming additives, and yet may include additives that can improve certain performances of battery, for example, additives that improve battery overcharge performance, additives that improve high-temperature performance of battery, and additives that improve low-temperature performance of battery.

### [Separator]

In the secondary batteries using an electrolytic solution and some secondary batteries using a solid electrolyte, separators may be further included. The separators are arranged between the positive electrode plate and the negative electrode plate, and mainly function as preventing short circuit of the positive and negative electrodes while allowing active ions to pass through. There is no particular limitation on the type of separator in the present application, and any well-known porous-structure separator with good chemical stability and mechanical stability may be used.

In some embodiments, materials of the separator may be at least one of glass fibers, non-woven fabrics, polyethylene, polypropylene and polyvinylidene fluoride. The separator may be a single-layer film or a multi-layer composite film. When the separator is a multi-layer composite film, materials of each layer may be the same or different.

In some embodiments, said positive electrode plate, said separator, and said negative electrode plate may be made into an electrode assembly by a winding process or a laminating process.

In some embodiments, said secondary battery may include an outer package. The outer package may be used to encapsulate said electrode assembly and electrolyte.

In some embodiments, said outer package of said secondary battery may be a hard case, such as a hard plastic case, an aluminum case, a steel case, and the like. The outer package of the secondary battery may also be a soft package, such as a pouch-type soft package. Material of the soft bag can be plastic, such as at least one of polypropylene (PP), polybutylene terephthalate (PBT), and polybutylene succinate (PBS).

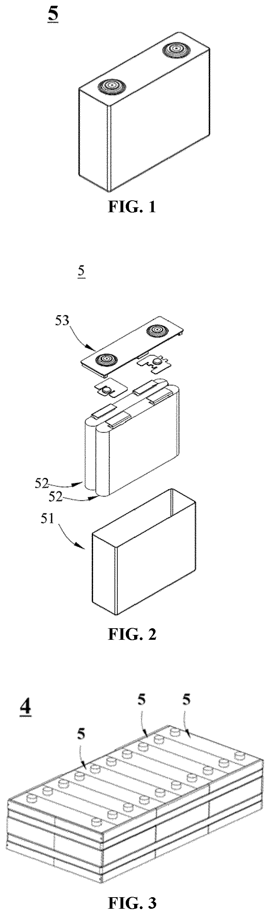

The shape of the secondary battery is not particularly limited in the present application, and it may be cylindrical, square, rectangular or any other shape. FIG. 1 is a schematic diagram of a secondary battery 5 of a rectangular structure as an example.

In some embodiments, as shown in FIG. 2, the outer package may include a casing 51 and a cover plate 53, wherein the casing 51 may include a bottom plate and side plates connected to the bottom plate, and the bottom plate and the side plates are enclosed to form an accommodating cavity. The casing 51 has an opening communicating with the accommodating cavity, and the cover plate 53 is used to cover the opening to close the accommodating cavity. A positive electrode plate, a separator, and a negative electrode plate may be made into an electrode assembly 52 by a winding process or a laminating process. The electrode assembly 52 is packaged in the accommodating cavity, and the electrolytic solution is infiltrated in the electrode assembly 52. The number of electrode assemblies 52 contained in the secondary battery 5 may be one or several, and may be adjusted according to requirements.

A process for preparing the secondary battery of the present application is well known in the art. In some embodiments, a positive electrode plate, a separator, a negative electrode plate and an electrolytic solution may be assembled into a secondary battery. As an example, a positive electrode plate, a separator, and a negative electrode plate can be made into an electrode assembly by a winding process or a laminating process, and the electrode assembly can be placed in an outer package and is subjected to drying, to which an electrolytic solution is injected. After vacuum encapsulation, resting, chemical formation, and shaping process, a secondary battery can be obtained.

In some embodiments of the present application, the secondary batteries according to the present application can be assembled into a battery module, and the number of secondary batteries contained in the battery module can be more than one, and the specific number can be adjusted according to application and capacity of the battery module.

FIG. 3 is a schematic diagram of the battery module 4 as an example. As shown in FIG. 3, in the battery module 4, a plurality of secondary batteries 5 may be arranged in sequence along the longitudinal direction of the battery module 4. Certainly, they can also be arranged in any other manner. Furthermore, a plurality of secondary batteries 5 can be fixed with fasteners.

Optionally, the battery module 4 may further include a housing having an accommodating space in which a plurality of secondary batteries 5 are accommodated.

In some embodiments, the above-mentioned battery modules can also be assembled into a battery pack, and the number of battery modules included in the battery pack can be adjusted according to the application and capacity of the battery pack.

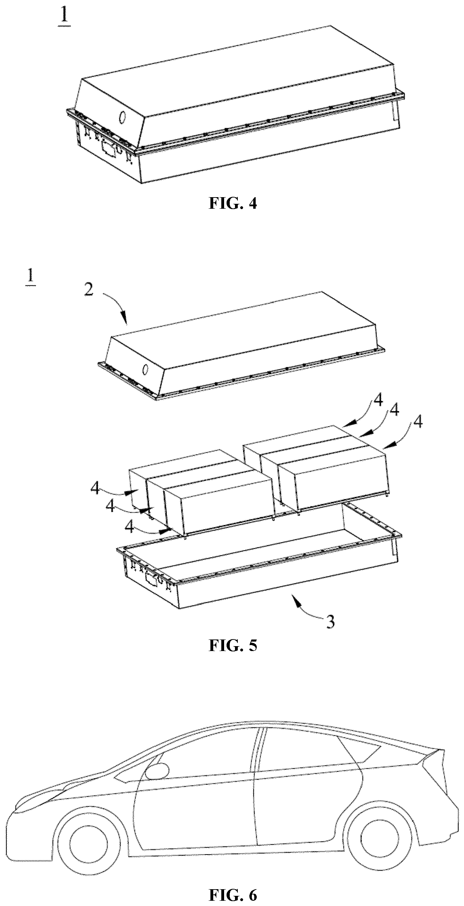

FIGS. 4 and 5 are schematic diagrams of the battery pack 1 as an example. As shown in FIGS. 4 and 5, the battery pack 1 may include a battery case and a plurality of battery modules 4 provided in the battery case. The battery box includes an upper case body 2 and a lower case body 3, and the upper case body 2 is used to cover the lower case body 3 to form a closed space for accommodating the battery modules 4. A plurality of battery modules 4 may be arranged in the battery case in any manner.

### Electrical device

A fifth aspect of the present application provides an electrical device comprising at least one of the secondary battery, battery module, and battery pack of the present application. The secondary battery, battery module or battery pack can be used as a power source of the electrical device, and can also be used as an energy storage unit of the electrical device. The electrical device can be, but is not limited to, a mobile device (e.g., a mobile phone, a notebook computer, and the like), an electric vehicle (e.g., a pure electric vehicle, a hybrid electric vehicle, a plug-in hybrid electric vehicle, an electric bicycle, an electric scooter, an electric golf vehicle, an electric truck and the like), an electric train, a ship, a satellite, an energy storage system, and the like.

The electrical device can select a secondary battery, a battery module or a battery pack according to its usage requirements.

FIG. 6 is a schematic diagrams of an electrical device as an example. The electrical device is a pure electric vehicle, a hybrid electric vehicle, or a plug-in hybrid electric vehicle. In order to meet high power and high energy density requirements of the electrical device, a battery pack or a battery module can be used.

As another example, the electrical device may be a mobile phone, a tablet computer, a notebook computer, and the like. The electric device is generally required to be light and thin, and a secondary battery can be used as a power source.

### Examples

The following examples more specifically describe the content disclosed in the present application, and these examples are only used for explanatory description, because various modifications and changes within the scope of the present disclosure are apparent to those skilled in the art. Unless otherwise stated, all parts, percentages, and ratios described in the following examples are based on weight, and all reagents used in the examples are commercially available or synthesized according to conventional methods and can be directly used without further treatment, and all instruments used in the examples are commercially available.

### Example 1

### 1) Preparation of positive electrode active material

Preparation of doped manganese oxalate: 1.3 mol of MnSO₄·H₂O and 0.7 mol of FeSO₄·H₂O were mixed thoroughly in a mixer for 6 hours. The mixture was transferred to a reaction kettle and 10 L of deionized water and 2 mol of oxalic acid dihydrate (as oxalic acid) were added. The reaction kettle was heated to 80°C and stirred at 600 rpm for 6 h. The reaction was terminated (no bubbles were generated) to obtain a suspension of Fe doped manganese oxalate. Then the suspension was filtered and the resulting filter cake was dried at 120°C, after which it was ground to obtain particles of Fe doped manganese oxalate with a median particle size Dv₅₀ of about 100 nm.

Preparation of core: 1 mol of the above particles of manganese oxalate, 0.497 mol of lithium carbonate, 0.001 mol of Mo(SO₄)₃, aqueous phosphoric acid solution containing 0.999 mol of phosphoric acid at a concentration of 85%, 0.001 mol of H₄SiO₄ and 0.0005 mol of NH₄HF₂ were added to 20 L of deionized water. The mixture was transferred to a sanding mill and well ground and stirred for 10 hours to obtain a slurry. Said slurry was transferred to a spray drying equipment for spray drying granulation, with a drying temperature of 250°C for 4 hours to obtain granules. The above powder was sintered at 700°C for 10 hours in a protective atmosphere of nitrogen (90 vol%) + hydrogen (10 vol%) to obtain Li_{0.994}Mo_{0.001}Mn_{0.65}Fe_{0.35}P_{0.999}Si_{0.001}O_{3.999}F_{0.001}, i.e. the core. The content of elements can be detected by inductively coupled plasma emission spectroscopy (ICP).

Cladding of cladding layer: Polyvinylidene fluoride was dissolved in N-methylpyrrolidone to form a cladding solution, and then the prepared core was added to the cladding solution with stirring well to form a mixed slurry, and then the mixed slurry was placed in a wet cladding equipment and dried in a nitrogen atmosphere at 120°C for 4 hours to obtain the positive electrode active material. The polyvinylidene fluoride has an electron withdrawing group (-F) in a mass percentage of 59.3% and a number average molecular weight of 180,000, and the cladding amount is 1 wt% based on the weight of the prepared core.

### 2) Preparation of button battery

The above positive electrode active material, polyvinylidene difluoride (PVDF), and acetylene black in a weight ratio of 90:5:5 were added to N-methylpyrrolidone (NMP) and stirred in a drying room to make a slurry. The above slurry was applied to an aluminum foil, dried and cold pressed to form a positive electrode plate. The coating amount was 0.2g/cm² and the compaction density was 2.0g/cm³.

Lithium plate was used as a negative electrode, a 1 mol/L solution of LiPF₆ in a 1:1:1 volume ratio of ethylene carbonate (EC), diethyl carbonate (DEC) and dimethyl carbonate (DMC) was used as an electrolytic solution, and they were assembled together with the above prepared positive electrode plate in a button battery box to form a button battery (hereinafter also referred to as "button").

### 3) Preparation of full battery

The above-mentioned positive electrode active material was mixed with acetylene black as a conductive agent and polyvinylidene difluoride (PVDF) as a binder in N-methylpyrrolidone as a solvent system in a weight ratio of 92:2.5:5.5 homogeneously to form a slurry. The above slurry was applied to on aluminum foil and dried and cold pressed to obtain a positive electrode plate. The coating amount was 0.4g/cm² and the compaction density was 2.4g/cm³.

An artificial graphite as a negative electrode active material, hard carbon, acetylene black as a conductive agent, butadiene rubber (SBR) as a binder, and sodium carboxymethyl cellulose (CMC) as a thickener were mixed in deionized water in a weight ratio of 90:5:2:2:1 to form a slurry, and then the slurry was applied to a copper foil and dried and cold pressed to obtain a negative electrode plate. The coating amount was 0.2g/cm² and the compaction density was 1.7g/cm³.

A porous polymer film of polyethylene (PE) was used as a separator. The positive electrode plate, separator and negative electrode plate were stacked in order, so that the separator was sandwiched between the positive and negative electrodes for isolation, and then they were wound to form an electrode assembly. The electrode assembly was placed in an outer package, filled with the same electrolytic solution as that in the above-mentioned preparation of button battery, and encapsulated to obtain a full battery.

### Example 2

Example 2 was the same as Example 1, with the exception that in "1) Preparation of positive electrode active material", the amount of Li₂CO₃ was adjusted to 0.4885 mol, Mo(SO₄)₃ was replaced with MgSO₄, the amount of FeSO₄·H₂O was adjusted to 0.68 mol, 0.02 mol of Ti(SO₄)₂ was added in the preparation of doped manganese oxalate, and H₄SiO₄ was replaced with HNO₃.

### Example 3

Example 3 was the same as Example 1, with the exception that in "1) Preparation of positive electrode active material", the amount of Li₂CO₃ was adjusted to 0.496 mol, Mo(SO₄)₃ was replaced with W(SO₄)₃, and H₄SiO₄ was replaced with H₂SO₄.

### Example 4

Example 4 was the same as Example 1, with the exception that in "1) Preparation of positive electrode active material", the amount of Li₂CO₃ was adjusted to 0.4985 mol, 0.001 mol of Mo(SO₄)₃ was replaced with 0.0005 mol of Al₂(SO₄)₃, and NH₄HF₂ was replaced with NH₄HCl₂.

### Example 5

Example 5 was the same as Example 1, with the exception that in "1) Preparation of positive electrode active material", the amount of FeSO₄·H₂O was adjusted to 0.69 mol, 0.01 mol of VCl₂ was added in the preparation of doped manganese oxalate, the amount of Li₂CO₃ was adjusted to 0.4965 mol, 0.001 mol of Mo(SO₄)₃ was replaced with 0.0005 mol of Nb₂(SO₄)₅ and H₄SiO₄ was replaced with H₂SO₄.

### Example 6

Example 6 was the same as Example 1, with the exception that in "1) Preparation of positive electrode active material", the amount of FeSO₄·H₂O was adjusted to 0.68 mol, 0.01 mol of VCl₂ and 0.01 mol of MgSO₄ were added in the preparation of doped manganese oxalate, the amount of Li₂CO₃ was adjusted to 0.4965 mol, 0.001 mol of Mo(SO₄)₃ was replaced with 0.0005 mol of Nb₂(SO₄)₅ and H₄SiO₄ was replaced with H₂SO₄.

### Example 7

Example 7 was the same as Example 6, with the exception that in "1) Preparation of positive electrode active material", MgSO₄ was replaced with CoSO₄.

### Example 8

Example 8 was the same as Example 6, with the exception that in "1) Preparation of positive electrode active material", MgSO₄ was replaced with NiSO₄.

### Example 9

Example 9 was the same as Example 1, with the exception that in "1) Preparation of positive electrode active material", the amount of FeSO₄·H₂O was adjusted to 0.698 mol, 0.002 mol of Ti(SO₄)₂ was added in the preparation of doped manganese oxalate, the amount of Li₂CO₃ was adjusted to 0.4955 mol, and 0.001 mol of Mo(SO₄)₃ was replaced with 0.0005 mol of Nb₂(SO₄)₅, H₄SiO₄ was replaced with H₂SO₄, and NH₄HF₂ was replaced with NH₄HCl₂.

### Example 10

Example 10 was the same as Example 1, with the exception that in "1) Preparation of positive electrode active material", the amount of FeSO₄·H₂O was adjusted to 0.68 mol, 0.01 mol of VCl₂ and 0.01 mol of MgSO₄ were added in the preparation of doped manganese oxalate, the amount of Li₂CO₃ was adjusted to 0.4975 mol, 0.001 mol of Mo(SO₄)₃ was replaced with 0.0005 mol of Nb₂(SO₄)₅, and NH₄HF₂ was replaced with NH₄HBr₂.

### Example 11

Example 11 was the same as Example 1, with the exception that in "1) Preparation of positive electrode active material", the amount of FeSO₄·H₂O was adjusted to 0.69 mol, 0.01 mol of VCl₂ was added in the preparation of doped manganese oxalate, the amount of Li₂CO₃ was adjusted to 0.499 mol, Mo(SO₄)₃ was replaced with MgSO₄, and NH₄HF₂ was replaced with NH₄HBr₂.

### Example 12

Example 12 was the same as Example 1, with the exception that in "1) Preparation of positive electrode active material", the amount of MnSO₄·H₂O was adjusted to 1.36 mol, the amount of FeSO₄·H₂O was adjusted to 0.6 mol, 0.04 mol of VCl₂ was added in the preparation of doped manganese oxalate, the amount of Li₂CO₃ was adjusted to 0.4985 mol, and Mo(SO₄)₃ was replaced with MgSO₄, and H₄SiO₄ was replaced with HNO₃.

### Example 13

Example 13 was the same as Example 12, with the exception that in "1) Preparation of positive electrode active material", the amount of MnSO₄·H₂O was adjusted to 1.16 mol, and the amount of FeSO₄·H₂O was adjusted to 0.8 mol.

### Example 14

Example 14 was the same as Example 12, with the exception that in "1) Preparation of positive electrode active material", the amount of MnSO₄·H₂O was adjusted to 1.3 mol, and the amount of VCl₂ was adjusted to 0.1 mol.

### Example 15

Example 15 was the same as Example 1, with the exception that in "1) Preparation of positive electrode active material", the amount of MnSO₄·H₂O was adjusted to 1.2 mol, 0.1 mol of VCl₂ was added in the preparation of doped manganese oxalate, the amount of Li₂CO₃ was adjusted to 0.494 mol, and 0.001 mol of Mo(SO₄)₃ was replaced with 0.005 mol of MgSO₄, and H₄SiO₄ was replaced with H₂SO₄.

### Example 16

Example 16 was the same as Example 1, with the exception that in "1) Preparation of positive electrode active material", the amount of MnSO₄·H₂O was adjusted to 1.2 mol, 0.1 mol of VCl₂ was added in the preparation of doped manganese oxalate, the amount of Li₂CO₃ was adjusted to 0.467 mol, and 0.001 mol of Mo(SO₄)₃ was replaced with 0.005 mol of MgSO₄, 0.001 mol of H₄SiO₄ was replaced with 0.005 mol of H₂SO₄ and 1.175 mol of phosphoric acid with a concentration of 85% was replaced with 1.171 mol of phosphoric acid with a concentration of 85%.

### Example 17

Example 17 was the same as Example 1, with the exception that in "1) Preparation of positive electrode active material", the amount of MnSO₄·H₂O was adjusted to 1.2 mol, 0.1 mol of VCl₂ was added in the preparation of doped manganese oxalate, the amount of Li₂CO₃ was adjusted to 0.492 mol, and 0.001 mol of Mo(SO₄)₃ was replaced with 0.005 mol of MgSO₄, H₄SiO₄ was replaced with H₂SO₄ and the amount of NH₄HF₂ was adjusted to 0.0025 mol.

### Example 18

Example 18 was the same as Example 1, with the exception that in "1) Preparation of positive electrode active material", the amount of FeSO₄·H₂O was adjusted to 0.5 mol, 0.1 mol of VCl₂ and 0.1 mol of CoSO₄ were added in the preparation of doped manganese oxalate, the amount of Li₂CO₃ was adjusted to 0.492 mol, and 0.001 mol of Mo(SO₄)₃ was replaced with 0.005 mol of MgSO₄, H₄SiO₄ was replaced with H₂SO₄ and the amount of NH₄HF₂ was adjusted to 0.0025 mol.

### Example 19

Example 19 was the same as Example 18, with the exception that in "1) Preparation of positive electrode active material", the amount of FeSO₄·H₂O was adjusted to 0.4 mol, and the amount of CoSO₄ was adjusted to 0.2 mol.

### Example 20

Example 20 was the same as Example 18, with the exception that in "1) Preparation of positive electrode active material", the amount of MnSO₄·H₂O was adjusted to 1.5 mol, the amount of FeSO₄·H₂O was adjusted to 0.1 mol, and the amount of CoSO₄ was adjusted to 0.3 mol.

### Example 21

Example 21 was the same as Example 18, with the exception that in "1) Preparation of positive electrode active material", 0.1 mol of CoSO₄ was replaced with 0.1 mol of NiSO₄.

### Example 22

Example 22 was the same as Example 18, with the exception that in "1) Preparation of positive electrode active material", the amount of MnSO₄·H₂O was adjusted to 1.5 mol, the amount of FeSO₄·H₂O was adjusted to 0.2 mol, and 0.1 mol of CoSO₄ was replaced with 0.2 mol of NiSO₄.

### Example 23

Example 23 was the same as Example 18, with the exception that in "1) Preparation of positive electrode active material", the amount of MnSO₄·H₂O was adjusted to 1.4 mol, the amount of FeSO₄·H₂O was adjusted to 0.3 mol, and the amount of CoSO₄ was adjusted to 0.2 mol.

### Example 24

Example 24 was the same as Example 1, with the exception that in "1) Preparation of positive electrode active material", the amount of MnSO₄·H₂O was adjusted to 1.2 mol, the amount of FeSO₄·H₂O was adjusted to 0.5 mol, 0.1 mol of VCl₂ and 0.2 mol of CoSO₄ were added in the preparation of doped manganese oxalate, the amount of Li₂CO₃ was adjusted to 0.497 mol, and 0.001 mol of Mo(SO₄)₃ was replaced with 0.005 mol of MgSO₄, H₄SiO₄ was replaced with H₂SO₄ and the amount of NH₄HF₂ was adjusted to 0.0025 mol.

### Example 25

Example 25 was the same as Example 18, with the exception that in "1) Preparation of positive electrode active material", the amount of MnSO₄·H₂O was adjusted to 1.0 mol, the amount of FeSO₄·H₂O was adjusted to 0.7 mol, and the amount of CoSO₄ was adjusted to 0.2 mol.

### Example 26

Example 26 was the same as Example 1, with the exception that in "1) Preparation of positive electrode active material", the amount of MnSO₄·H₂O was adjusted to 1.4 mol, the amount of FeSO₄·H₂O was adjusted to 0.3 mol, 0.1 mol of VCl₂ and 0.2 mol of CoSO₄ were added in the preparation of doped manganese oxalate, the amount of Li₂CO₃ was adjusted to 0.4825 mol, and 0.001 mol of Mo(SO₄)₃ was replaced with 0.005 mol of MgSO₄, the amount of H₄SiO₄ was adjusted to 0.1 mol, the amount of phosphoric acid was adjusted to 0.9 mol and the amount of NH₄HF₂ was adjusted to 0.04 mol.

### Example 27

Example 27 was the same as Example 1, with the exception that in "1) Preparation of positive electrode active material", the amount of MnSO₄·H₂O was adjusted to 1.4 mol, the amount of FeSO₄·H₂O was adjusted to 0.3 mol, 0.1 mol of VCl₂ and 0.2 mol of CoSO₄ were added in the preparation of doped manganese oxalate, the amount of Li₂CO₃ was adjusted to 0.485 mol, and 0.001 mol of Mo(SO₄)₃ was replaced with 0.005 mol of MgSO₄, the amount of H₄SiO₄ was adjusted to 0.08 mol, the amount of phosphoric acid was adjusted to 0.92 mol and the amount of NH₄HF₂ was adjusted to 0.05 mol.

### Examples 28-36

Examples 28-36 were the same as Example 1, with the exception that in "1) Preparation of positive electrode active material", polyvinylidene fluoride was replaced with polyacrylonitrile (with an electron withdrawing group of -CN in a mass percentage of 49.0%, and a number average molecular weight of 150,000), with polyacrylic acid (with an electron withdrawing group of - COOH in a mass percentage of 62.5%, and a number average molecular weight of 100,000), with polymethyl methacrylate (with an electron withdrawing group of -COO- in a mass percentage of 44.0%, and a number average molecular weight of 88,500), with a nitrile rubber (with an electron withdrawing group of -CN in a mass percentage of 30.2%, and a number average molecular weight of 68,000), with polyacrylamide (with an electron withdrawing group of -CONH₂ in a mass percentage of 61.9%, and a number average molecular weight of 120,000), with a mercaptan resin (with an electron withdrawing group of -SH in a mass percentage of 22.0%, and a number average molecular weight of 125,000), with polystyrene phosphorous acid (with an electron withdrawing group of phosphoric acid group in a mass percentage of 38.9%, and a number average molecular weight of 257,000), with a mercaptan resin (with an electron withdrawing group of -SH in a mass percentage of 15.0%, and a number average molecular weight of 156,000), or with polycyanoacrylic acid (with an electron withdrawing groups of -CN and -COOH in a mass percentage of 75.0%, and a number average molecular weight of 273,000), respectively.

### Examples 37-43

Examples 37-43 were the same as Example 1, with the exception that in "1) Preparation of positive electrode active material", the cladding amount of polyvinylidene fluoride was adjusted to 0.1 wt%, 3 wt%, 5 wt%, 8 wt%, 10 wt%, 15 wt%, and 20 wt%, respectively, based on the weight of the prepared core.

### Examples 44-50

Examples 44-50 were the same as Example 1, with the exception that in "1) Preparation of positive electrode active material", polyvinylidene fluoride was replaced with polyacrylic acid having a number average molecular weight of 10000, 15000, 50000, 200000, 250000, 300000, and 400000, respectively.

### Comparative Example 1

Preparation of manganese oxalate: 1 mol of MnSO₄·H₂O was added to a reaction kettle and 10 L of deionized water and 1 mol of oxalic acid dihydrate (as oxalic acid) were added. The reaction kettle was heated to 80°C and stirred at 600 rpm for 6 h. The reaction was terminated (no bubbles were generated) to obtain a suspension of manganese oxalate. Then the suspension was filtered and the resulting filter cake was dried at 120°C, after which it was ground to obtain particles of manganese oxalate with a median particle size Dv₅₀ of 50-200 nm.

Preparation of lithium manganese phosphate: 1 mol of the above particles of manganese oxalate, 0.5 mol of lithium carbonate, and aqueous phosphoric acid solution containing 1 mol of 85% phosphoric acid were added to 20 L of deionized water. The mixture was transferred to a sanding mill and well ground and stirred for 10 hours to obtain a slurry. Said slurry was transferred to a spray drying equipment for spray drying granulation, with a drying temperature of 250°C for 4 hours to obtain granules. The above powder was sintered at 700°C for 10 hours in a protective atmosphere of nitrogen (90 vol%) + hydrogen (10 vol%) to obtain LiMnPO₄.

### Comparative Example 2

Comparative Example 2 was the same as Comparative Example 1, with the exception that 1 mol of MnSO₄·H₂O was replaced with 0.85 mol of MnSO₄·H₂O and 0.15 mol of FeSO₄·H₂O, and MnSO₄·H₂O and FeSO₄·H₂O were mixed thoroughly in a mixer for 6 hours and then transferred to a reaction kettle.

### Comparative Example 3

Comparative Example 3 was the same as Example 1, with the exception that in "1) Preparation of positive electrode active material", no polymer cladding layer was applied on the surface of the prepared core, the amount of MnSO₄·H₂O was adjusted to 1.9 mol, 0.7 mol of FeSO₄·H₂O was replaced with 0.1 mol of ZnSO₄, the amount of Li₂CO₃ was adjusted to 0.495 mol, 0.001 mol of Mo(SO₄)₃ was replaced with 0.005 mol of MgSO₄, the amount of phosphoric acid was adjusted to 1 mol, and neither H₄SiO₄ nor NH₄HF₂ was added.

### Comparative Example 4

Comparative Example 4 was the same as Example 1, with the exception that in "1) Preparation of positive electrode active material", no polymer cladding layer was applied on the surface of the prepared core, the amount of MnSO₄·H₂O was adjusted to 1.2 mol, the amount of FeSO₄·H₂O was adjusted to 0.8 mol, the amount of Li₂CO₃ was adjusted to 0.45 mol, 0.001 mol of Mo(SO₄)₃ was replaced with 0.005 mol of Nb₂(SO₄)₅, the amount of phosphoric acid was adjusted to 1 mol, , the amount of NH₄HF₂ was adjusted to 0.025 mol and no H₄SiO₄ was added.

### Comparative Example 5

Comparative Example 5 was the same as Example 1, with the exception that in "1) Preparation of positive electrode active material", no polymer cladding layer was applied on the surface of the prepared core, the amount of MnSO₄·H₂O was adjusted to 1.4 mol, the amount of FeSO₄·H₂O was adjusted to 0.6 mol, the amount of Li₂CO₃ was adjusted to 0.38 mol, and 0.001 mol of Mo(SO₄)₃ was replaced with 0.12 mol of MgSO₄.

### Comparative Example 6

Comparative Example 6 was the same as Example 1, with the exception that in "1) Preparation of positive electrode active material", no polymer cladding layer was applied on the surface of the prepared core, the amount of MnSO₄·H₂O was adjusted to 0.8 mol, 0.7 mol of FeSO₄·H₂O was replaced with 1.2 mol of ZnSO₄, the amount of Li₂CO₃ was adjusted to 0.499 mol, and 0.001 mol of Mo(SO₄)₃ was replaced with 0.001 mol of MgSO₄.

### Comparative Example 7

Comparative Example 7 was the same as Example 1, with the exception that in "1) Preparation of positive electrode active material", no polymer cladding layer was applied on the surface of the prepared core, the amount of MnSO₄·H₂O was adjusted to 1.4 mol, 0.001 mol of Mo(SO₄)₃ was replaced with 0.001 mol of MgSO₄, the amount of phosphoric acid was adjusted to 0.88 mol, the amount of H₄SiO₄ was adjusted to 0.12 mol, and the amount of NH₄HF₂ was adjusted to 0.025 mol.

### Comparative Example 8

Comparative Example 8 was the same as Example 1, with the exception that in "1) Preparation of positive electrode active material", no polymer cladding layer was applied on the surface of the prepared core, the amount of MnSO₄·H₂O was adjusted to 1.2 mol, the amount of FeSO₄·H₂O was adjusted to 0.8 mol, the amount of Li₂CO₃ was adjusted to 0.474 mol, 0.001 mol of Mo(SO₄)₃ was replaced with 0.001 mol of MgSO₄, the amount of phosphoric acid was adjusted to 0.93 mol, the amount of H₄SiO₄ was adjusted to 0.07 mol, and the amount of NH₄HF₂ was adjusted to 0.06 mol.

### Comparative Example 9

Comparative Example 9 was the same as Example 1, with the exception that in "1) Preparation of positive electrode active material", no polymer cladding layer was applied on the surface of the prepared core.

### Test methods for performance of positive electrode active materials, positive electrode plates, and batteries

### 1. Measurement method for lattice change rate

Under a constant temperature environment of 25°C, a positive electrode active material sample was placed in an X-ray diffractometer (Bruker D8 Discover model) and tested at 1°/minute. The test data was organized and analyzed. Referring to the standard PDF card, the lattice constants a0, b0, c0, and v0 (a0, b0, and c0 represent the length size in individual directions of lattice cell, respectively, v0 represents the volume of lattice cell, which can be directly obtained through XRD refinement results) were calculated.

Using the preparation method of button battery in the above Example, the positive electrode active material sample was prepared into a button battery. The button battery was charged at a small rate of 0.05C until the current decreased to 0.01C. Then the positive electrode plate was taken out the button battery and soaked in DMC for 8 hours. After drying and scraping the powder, the particles with a particle size less than 500 nm were screened out. A sample was taken and its lattice constant v1 was calculated in the same way as the fresh sample was tested above. (v0-v1)/v0 ×100% representing the lattice change rate of before and after complete de-intercalation and intercalation of lithium was shown in the table.

### 2. Measurement method for Li/Mn anti-site defect concentration

The XRD results measured in the "Measurement method for lattice change rate" were compared with the PDF (Powder Diffusion File) card of standard crystal to obtain the Li/Mn anti-site defect concentration. Specifically, the XRD results tested in the "Measurement method for lattice change rate" were imported into the General Structural Analysis System (GSAS) software to automatically obtain refined results, which include the occupancy of different atoms. The Li/Mn anti-site defect concentration was obtained by reading the refined results.

### 3. Measurement method for surface oxygen valence

5g of positive electrode active material sample was taken and prepared into a button battery according to the preparation method of button battery described in the above Example. The button battery was charged at a low rate of 0.05C until the current decreased to 0.01C. Then the positive electrode plate was taken out the button battery and soaked in DMC for 8 hours. After drying and scraping the powder, the particles with a particle size less than 500 nm were screened out. The obtained particles were measured with Electron Energy Loss Spectroscopy (EELS, Talos F200S model) to obtain the energy loss near edge structure (ELNES), which can reflect the state density and energy level distribution of elements. Based on the density of states and energy level distribution, the number of occupied electrons was calculated by integrating the density of states in valence band, thereby calculating the surface oxygen valence after charging.

### 4. Measurement method for compaction density

5g of positive electrode active material sample powders were taken and placed in a special mold for compaction (CARVER mold in the United States, model 13mm), and then the mold was placed on a compaction density instrument. 3T (tonne) of pressure was applied and the thickness of the powders under pressure was read on the equipment (the thickness after pressure relief, the area of the container used for testing being 1540.25mm²). The compaction density was calculated via ρ= m/v.

### 5. Measurement method for leaching out of Mn (and Fe doped at Mn site) after cycling

At 45 °C, a full battery with capacity reduced to 80% was discharged to 2.0 V of cutoff voltage at a rate of 0.1 C. Then the battery was disassembled, the negative electrode plate was taken out. 30 discs of unit areas (1540.25mm²) were randomly taken on the negative electrode plate. Inductively coupled plasma emission spectrum (ICP) was tested by using Agilent ICP-OES730. The amounts of Fe (if Fe was doped at Mn site of the positive electrode active material) and Mn were calculated on the basis of the ICP results, and then the amount of leaching out of Mn (and Fe doped at Mn site) after cycling was calculated. The testing standard was based on EPA-6010D-2014.

### 6. Measurement method for initial gram capacity of button cell

At a constant temperature of 25°C, a button battery was charged to 4.3V at 0.1C, then charged at a constant voltage of 4.3V until the current was less than or equal to 0.05 mA, then rested for 5 minutes. Then the button battery was discharged at 0.1C to 2.0V. The discharge capacity measured at this moment was initial gram capacity, denoted as D0.

### 7. Measurement method for 3C charging constant current ratio

Under a constant temperature environment of 25°C, a fresh full battery rested for 5 minutes and was discharged at a rate of 1/3C to 2.5V, and rested for 5 minutes and was charged at 1/3C to 4.3V, and then charged at a constant voltage at 4.3V until the current was less than or equal to 0.05 mA. The full battery rested for 5 minutes, then the charging capacity at this moment was reported as C0. The full battery was discharged at 1/3C to 2.5V, rested for 5 minutes, then was charged at 3C to 4.3V, rested for 5 minutes. The charging capacity at this moment was reported as C1. The 3C charging constant current ratio was C1/C0 × 100%.

The higher the 3C charging constant current ratio, the better the rate performance of the battery.

### 8. Test of cycle performance at 45 °C of full battery

Under a constant temperature environment of 45°C, a full battery was charged at 1C to 4.3V, and then charged at a constant voltage at 4.3V until the current was less than or equal to 0.05 mA. The full battery rested for 5 minutes, then discharged at 1C to 2.5V. The discharging capacity at this moment was reported as E0. The above charging-discharging cycle was repeated until the discharging capacity was reduced to 80% of E0. The number of cycles the battery had undergone at this moment was reported.

### 9. Test of gas expansion at 60°C of full battery

A full battery stored 100% state of charge (SOC) at 60°C. Before and during storage, the open circuit voltage (OCV) and AC internal impedance (IMP) of the battery were tested to monitor SOC and the volume of the battery was measured. After every 48 hours of storage, the full battery was taken out and rested for 1 hour, and then the open circuit voltage (OCV) and internal impedance (IMP) were tested. After cooling to room temperature, the volume of the battery was measured using the drainage method. The drainage method included measuring the gravity Fi of the battery separately with a balance that can automatically perform unit conversion with the dial data, and then placing the battery completely in deionized water (with the density of 1g/cm³), measuring the gravity F₂ of the battery at this moment wherein the buoyant force F_{b} of the battery was F₁-F₂, and then according to the Archimedes principle F_{b} = ρ× g × V, the volume of battery was calculated: V=( F₁-F₂)/(ρ×g).

From the OCV and IMP test results, it can be seen that the battery maintains a SOC of 99% or higher throughout the testing process until the end of storage.

After 30 days of storage, the volume of battery was measured, and the percentage increase in battery volume after storage compared to the previous battery volume was calculated.

### 10. Determination of the chemical formula of core and the composition of cladding layer

The internal microstructure and surface structure of the positive electrode active material were characterized with high spatial resolution by the spherical Aberration Corrected Scanning Transmission Electron Microscope (ACSTEM). By combining with the three-dimensional reconstruction technology, the chemical formula of the core and the composition of the cladding layer of the positive electrode active material were obtained.

Table 1 shows the composition of the positive electrode active material in Examples 1-11 and Comparative Examples 1-9.

Table 2 shows the composition of the positive electrode active material in Examples 12-27.

Table 3 shows the performance results measured by the above performance testing methods for the positive electrode active material, positive electrode plate, button battery or full battery of Examples 1-11 and Comparative Examples 1-9.

Table 4 shows the performance results measured by the above performance testing methods for the positive electrode active material, positive electrode plate, button battery or full battery of Examples 12-27.

**Table 1**

| No. | Core | Cladding layer |
|---|---|---|
| Comparative Example 1 | LiMnPO₄ | - |
| Comparative Example 2 | LiMn_{0.85}Fe_{0.15}PO₄ | - |
| Comparative Example 3 | Li_{0.990}Mg_{0.005}Mn_{0.95}Zn_{0.05}PO₄ | - |
| Comparative Example 4 | Li_{0.90}Nb_{0.01}Mn_{0.6}Fe_{0.4}PC_{3.95}F_{0.05} | - |
| Comparative Example 5 | Li_{0.76}Mg_{0.12}Mn_{0.7}Fe_{0.3}P_{0.999}Si_{0.001}C_{3.999}F_{0.001} | - |
| Comparative Example 6 | Li_{0.998}Mg_{0.001}Mn_{0.4}Zn_{0.6}P_{0.999}Si_{0.001}C_{3.999}F_{0.001} | - |
| Comparative Example 7 | Li_{1.068}Mg_{0.001}Mn_{0.7}Fe_{0.3}P_{0.88}Si_{0.12}C_{3.95}F_{0.05} | - |
| Comparative Example 8 | Li_{0.948}Mg_{0.001}Mn_{0.6}Fe_{0.4}P_{0.93}Si_{0.07}C_{3.88}F_{0.12} | - |
| Comparative Example 9 | Li_{0.994}Mo_{0.001}Mn_{0.65}Fe_{0.35}P_{0.999}Si_{0.001}O_{3.999}F_{0.001} | - |
| Example 1 | Li_{0.994}Mo_{0.001}Mn_{0.65}Fe_{0.35}P_{0.999}Si_{0.001}O_{3.999}F_{0.001} | 1% polyvinylidene fluoride |
| Example 2 | Li_{0.977}Mg_{0.001}Mn_{0.65}Fe_{0.34}Ti_{0.01}P_{0.999}N_{0.001}O_{3.999}F_{0.001} | 1% polyvinylidene fluoride |
| Example 3 | Li_{0.992}W_{0.001}Mn_{0.65}Fe_{0.35}P_{0.999}S_{0.001}O_{3.999}F_{0.001} | 1% polyvinylidene fluoride |
| Example 4 | Li_{0.997}Al_{0.001}Mn_{0.65}Fe_{0.35}P_{0.999}Si_{0.001}O_{3.999}Cl_{0.001} | 1% polyvinylidene fluoride |
| Example 5 | Li_{0.993}Nb_{0.001}Mn_{0.65}Fe_{0.345}V_{0.005}P_{0.999}S_{0.001}O_{3.999}F_{0.001} | 1% polyvinylidene fluoride |
| Example 6 | Li_{0.993}Nb_{0.001}Mn_{0.65}Fe_{0.34}V_{0.005}Mg_{0.005}P_{0.999}S_{0.001}O_{3.999}F_{0.001} | 1% polyvinylidene fluoride |
| Example 7 | Li_{0.993}Nb_{0.001}Mn_{0.65}Fe_{0.34}V_{0.005}Co_{0.005}P_{0.999}S_{0.001}O_{3.999}F_{0.001} | 1% polyvinylidene fluoride |
| Example 8 | Li_{0.993}Nb_{0.001}Mn_{0.65}Fe_{0.34}V_{0.005}Ni_{0.005}P_{0.999}S_{0.001}O_{3.999}F_{0.001} | 1% polyvinylidene fluoride |
| Example 9 | Li_{0.991}Nb_{0.001}Mn_{0.65}Fe_{0.349}Ti_{0.001}P_{0.999}S_{0.001}O_{3.999}Cl_{0.001} | 1% polyvinylidene fluoride |
| Example 10 | Li_{0.995}Nb_{0.001}Mn_{0.65}Fe_{0.34}V_{0.005}Mg_{0.005}P_{0.999}Si_{0.001}O_{3.999}Br_{0.001} | 1% polyvinylidene fluoride |
| Example 11 | Li_{0.998}Mg_{0.001}Mn_{0.65}Fe_{0.345}V_{0.005}P_{0.999}Si_{0.001}O_{3.999}Br_{0.001} | 1% polyvinylidene fluoride |

**Table 2**

| No. | Core | (1-y):y | a:x | Cladding layer |
|---|---|---|---|---|
| Example 12 | Li_{0.997}Mg_{0.001}Mn_{0.68}Fe_{0.3}V_{0.02}P_{0.999}N_{0.001}O_{3.999}F_{0.001} | 2.13 | 997 | 1% polyvinylidene fluoride |
| Example 13 | Li_{0.997}Mg_{0.001}Mn_{0.58}Fe_{0.4}V_{0.02}P_{0.999}N_{0.001}O_{3.999}F_{0.001} | 1.38 | 997 | 1% polyvinylidene fluoride |
| Example 14 | Li_{0.997}Mg_{0.001}Mn_{0.65}Fe_{0.3}V_{0.05}P_{0.999}N_{0.001}O_{3.999}F_{0.001} | 1.86 | 997 | 1% polyvinylidene fluoride |
| Example 15 | Li_{0.988}Mg_{0.005}Mn_{0.6}Fe_{0.35}V_{0.05}P_{0.999}S_{0.001}O_{3.999}F_{0.001} | 1.50 | 197.6 | 1% polyvinylidene fluoride |
| Example 16 | Li_{0.984}Mg_{0.005}Mn_{0.6}Fe_{0.35}V_{0.05}P_{0.995}S_{0.005}O_{3.999}F_{0.001} | 1.50 | 196.8 | 1% polyvinylidene fluoride |
| Example 17 | Li_{0.984}Mg_{0.005}Mn_{0.6}Fe_{0.35}V_{0.05}P_{0.999}S_{0.001}O_{3.995}F_{0.005} | 1.50 | 196.8 | 1% polyvinylidene fluoride |
| Example 18 | Li_{0.984}Mg_{0.005}Mn_{0.65}Fe_{0.25}V_{0.05}Co_{0.05}P_{0.999}S_{0.001}O_{3.995}F_{0.005} | 1.86 | 196.8 | 1% polyvinylidene fluoride |
| Example 19 | Li_{0.984}Mg_{0.005}Mn_{0.65}Fe₀.₂₀V₀.₀₅Co₀.₁₀P_{0.999}S₀.₀₀₁O₃.₉₉₅F_{0.005} | 1.86 | 196.8 | 1% polyvinylidene fluoride |
| Example 20 | Li_{0.984}Mg_{0.005}Mn_{0.75}Fe_{0.05}V_{0.05}Co_{0.15}P_{0.999}S_{0.001}O_{3.995}F_{0.005} | 3.00 | 196.8 | 1% polyvinylidene fluoride |
| Example 21 | Li_{0.984}Mg_{0.005}Mn_{0.65}Fe_{0.25}V_{0.05}Ni_{0.05}P_{0.999}S_{0.001}O_{3.995}F_{0.005} | 1.86 | 196.8 | 1% polyvinylidene fluoride |
| Example 22 | Li_{0.984}Mg_{0.005}Mn_{0.75}Fe_{0.10}V_{0.05}Ni_{0.10}P_{0.999}S_{0.001}O_{3.995}F_{0.005} | 3.00 | 196.8 | 1% polyvinylidene fluoride |
| Example 23 | Li_{0.984}Mg_{0.005}Mn_{0.7}Fe_{0.15}V_{0.05}Co_{0.10}P_{0.999}S_{0.001}O_{3.995}F_{0.005} | 2.33 | 196.8 | 1% polyvinylidene fluoride |
| Example 24 | Li_{0.984}Mg_{0.005}Mn_{0.6}Fe_{0.25}V_{0.05}Co_{0.10}P_{0.999}S_{0.001}O_{3.995}F_{0.005} | 1.50 | 196.8 | 1% polyvinylidene fluoride |
| Example 25 | Li_{0.984}Mg_{0.005}Mn_{0.5}Fe_{0.35}V_{0.05}Co_{0.10}P_{0.999}S_{0.001}O_{3.995}F_{0.005} | 1.00 | 196.8 | 1% polyvinylidene fluoride |
| Example 26 | Li_{1.01}Mg_{0.005}Mn_{0.7}Fe_{0.15}V_{0.05}Co_{0.10}P_{0.9}Si_{0.1}O_{3.92}F_{0.08} | 2.33 | 202 | 1% polyvinylidene fluoride |
| Example 27 | Li_{0.97}Mg_{0.005}Mn_{0.7}Fe_{0.15}V_{0.05}Co_{0.10}P_{0.92}Si_{0.08}O_{3.9}F_{0.1} | 2.33 | 194 | 1% polyvinylidene fluoride |

**Table 3**

| No. | Lattic e chang e rate (%) | Li/Mn anti-site defect concentration (%) | Surfac e oxygen valenc e | Compaction density g/cm³ | Leachin g out of Mn and Fe after cycling (ppm) | Initial gram capacity of button battery mAh/g | 3C charging constant current ratio (%) | Number of cycles at capacity retention of 80% @45°C | Expansion rate of battery at 60°C storage (%) |
|---|---|---|---|---|---|---|---|---|---|
| Comparativ e Example 1 | 11.4 | 5.2 | -1.55 | 1.6 | 2266 | 123.1 | 48.1 | 111 | 50.5 |
| Comparativ e Example 2 | 10.6 | 4.3 | -1.51 | 1.77 | 1661 | 123.9 | 48.4 | 119 | 38.8 |
| Comparativ e Example 3 | 10.8 | 3.6 | -1.64 | 1.78 | 1131 | 132.0 | 49.6 | 123 | 33.2 |
| Comparativ e Example 4 | 9.7 | 2.4 | -1.71 | 1.83 | 1078 | 138.5 | 59.8 | 136 | 32.0 |
| Comparativ e Example 5 | 5.6 | 1.8 | -1.81 | 1.88 | 960 | 108.6 | 48.2 | 356 | 22.3 |
| Comparativ e Example 6 | 3.7 | 1.5 | -1.8 | 1.91 | 631 | 72.8 | 63.2 | 431 | 16.4 |
| Comparativ e Example 7 | 7.8 | 1.5 | -1.75 | 1.95 | 492 | 136.6 | 61.7 | 364 | 19.0 |
| Comparativ e Example 8 | 8.4 | 1.4 | -1.79 | 2.06 | 289 | 138.9 | 61.3 | 374 | 23.6 |
| Comparativ e Example 9 | 6.3 | 1.2 | -1.82 | 2.11 | 211 | 153.9 | 65.7 | 508 | 8.7 |
| Example 1 | 6.2 | 1.3 | -1.82 | 2.12 | 98 | 153.8 | 65.6 | 731 | 8.6 |
| Example 2 | 6.8 | 1.1 | -1.85 | 2.13 | 76 | 151.1 | 72.5 | 753 | 7.8 |
| Example 3 | 6.4 | 0.9 | -1.86 | 2.19 | 62 | 152.3 | 74.0 | 805 | 8.9 |
| Example 4 | 5.5 | 0.9 | -1.89 | 2.26 | 59 | 151.3 | 75.7 | 792 | 8.6 |
| Example 5 | 5.3 | 0.7 | -1.98 | 2.33 | 55 | 151.5 | 81.5 | 920 | 8.1 |
| Example 6 | 2.4 | 0.7 | -1.95 | 2.35 | 48 | 155.1 | 89.3 | 895 | 6.7 |
| Example 7 | 2.2 | 0.6 | -1.96 | 2.37 | 43 | 156.9 | 91.5 | 931 | 6.6 |
| Example 8 | 3.4 | 0.5 | -1.98 | 2.39 | 40 | 155.2 | 90.5 | 879 | 6.4 |
| Example 9 | 3.8 | 0.5 | -1.96 | 2.33 | 48 | 144.6 | 89.9 | 843 | 7.1 |
| Example 10 | 4 | 0.6 | -1.97 | 2.34 | 42 | 153.4 | 90.1 | 798 | 6.8 |
| Example 11 | 3.6 | 0.7 | -1.95 | 2.34 | 79 | 153.5 | 91.2 | 751 | 6.7 |

**Table 4**

| No. | Lattice change rate (%) | Li/Mn anti-site defect concentration (%) | Surfac e oxygen valenc e | Compaction density g/cm³ | Leachin g out of Mn and Fe after cycling (ppm) | Initial gram capacity of button battery mAh/g | 3C charging constant current ratio (%) | Number of cycles at capacity retention of 80% @45°C | Expansion rate of battery at 60°C storage (%) |
|---|---|---|---|---|---|---|---|---|---|
| Example 12 | 7.4 | 0.5 | -1.96 | 2.34 | 59 | 151.0 | 95.1 | 1088 | 7.0 |
| Example 13 | 7.6 | 0.4 | -1.98 | 2.37 | 46 | 155.6 | 82.1 | 1096 | 8.1 |
| Example 14 | 7.8 | 0.6 | -1.95 | 2.36 | 50 | 153.1 | 82.2 | 1199 | 7.2 |
| Example 15 | 6.4 | 0.5 | -1.97 | 2.38 | 48 | 154.1 | 79.2 | 1065 | 7.8 |
| Example 16 | 5.4 | 0.7 | -1.94 | 2.33 | 48 | 153.8 | 84.2 | 1043 | 8.7 |
| Example 17 | 4.2 | 0.6 | -1.98 | 2.31 | 43 | 154.2 | 90.4 | 1055 | 7.8 |
| Example 18 | 2.5 | 0.4 | -1.96 | 2.35 | 44 | 155.0 | 92.1 | 1169 | 6.7 |
| Example 19 | 2.4 | 0.4 | -1.97 | 2.36 | 46 | 154.8 | 92.8 | 1191 | 7.0 |
| Example 20 | 2.6 | 0.4 | -1.95 | 2.34 | 49 | 152.5 | 91.3 | 1078 | 7.6 |
| Example 21 | 3.3 | 0.5 | -1.93 | 2.35 | 42 | 153.4 | 88.3 | 1083 | 6.6 |
| Example 22 | 3.1 | 0.5 | -1.95 | 2.35 | 49 | 154.9 | 89.6 | 1041 | 6.6 |
| Example 23 | 2.8 | 0.6 | -1.96 | 2.33 | 51 | 149.5 | 82.4 | 982 | 6.1 |
| Example 24 | 2.5 | 0.5 | -1.97 | 2.34 | 39 | 150.0 | 88.1 | 1011 | 5.8 |
| Example 25 | 2.2 | 0.4 | -1.98 | 2.35 | 34 | 151.0 | 90.1 | 1009 | 5.4 |
| Example 26 | 3.4 | 0.6 | -1.95 | 2.14 | 32 | 145.1 | 90.3 | 1079 | 9.7 |
| Example 27 | 2.7 | 0.5 | -1.98 | 2.17 | 35 | 143.6 | 89.8 | 1029 | 10.9 |

From Table 3 and Table 4 above, it can be seen that better performance have been achieved by using the positive electrode active materials of Examples of this application than Comparative Example, in one or all aspects of cycling performance, high-temperature stability, gram capacity, and compaction density. By simultaneously doping specific elements at the Li, Mn, P, and O sites of LiMnPO₄ with specific amounts, improved rate performance can be achieved while reducing the leaching out of Mn and Fe, resulting in improved cycling performance and/or high-temperature stability. Additionally, the gram capacity and compaction density of the positive electrode active material can also be increased. The presence of a cladding layer can further alleviate the corrosion of the electrolyte on the surface of the positive electrode active material, reduce the leaching out of Mn and Fe after cycling, and significantly improve the cycling performance of the battery.

From the comparison between Examples 18-20 and 23-25, it can be seen that with the same other elements, (1-y):y in the range of 1 to 4 can further improve the energy density and cycling performance of the secondary battery.

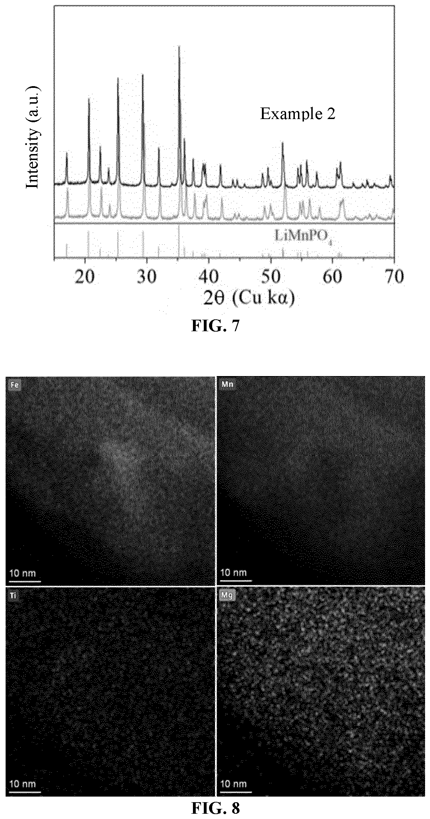

FIG. 7 shows the X-ray diffraction pattern (XRD) of the undoped LiMnPO₄ and the core of the positive electrode active material prepared in Example 2. It can be seen from FIG. 7 that the main characteristic peak positions in the XRD spectrum of the core of the positive electrode active material in Example 2 are consistent with those of the undoped LiMnPO₄, indicating that no impurity phase is introduced during the doping process, and the improvement in performance is mainly caused by doping of elements rather than by impurity phase. FIG. 8 shows the X-ray energy dispersive spectrum (EDS) of the core of the positive electrode active material prepared in Example 2. The dotted distribution in FIG. 8 represents individual doped elements. It can be seen from FIG. 8 that the element doping in the core of the positive electrode active material in Example 2 is uniform.

Table 5 shows the composition of cladding layers of the positive electrode active materials of Examples 28-50.

Table 6 shows the performance data of the positive electrode active material, positive electrode plate, button battery or full battery of Examples 28-50 measured according to the above performance testing method.

**Table 5**

| No. | Cladding layer | | | |
|---|---|---|---|---|
| | Polymer | The amount α of electron withdrawing group | Number average molecular weight | The amount of cladding layer |
| Example 1 | Polyvinylidene fluoride | 59.3% | 180000 | 1% |
| Example 28 | Polyacrylonitrile | 49.0% | 150000 | 1% |
| Example 29 | Polyacrylic acid | 62.5% | 100000 | 1% |
| Example 30 | Polymethyl methacrylate | 44.0% | 88500 | 1% |
| Example 31 | Nitrile rubber | 30.2% | 68000 | 1% |
| Example 32 | Polyacrylamide | 61.9% | 120000 | 1% |
| Example 33 | Mercaptan resin | 22.0% | 125000 | 1% |
| Example 34 | Polystyrene phosphorous acid | 38.9% | 257000 | 1% |
| Example 35 | Mercaptan resin | 15.0% | 156000 | 1% |
| Example 36 | Polycyanoacrylic acid | 75.0% | 273000 | 1% |
| Example 37 | Polyvinylidene fluoride | 59.3% | 180000 | 0.1% |
| Example 38 | Polyvinylidene fluoride | 59.3% | 180000 | 3% |
| Example 39 | Polyvinylidene fluoride | 59.3% | 180000 | 5% |
| Example 40 | Polyvinylidene fluoride | 59.3% | 180000 | 8% |
| Example 41 | Polyvinylidene fluoride | 59.3% | 180000 | 10% |
| Example 42 | Polyvinylidene fluoride | 59.3% | 180000 | 15% |
| Example 43 | Polyvinylidene fluoride | 59.3% | 180000 | 20% |
| Example 44 | Polyacrylic acid | 62.5% | 10000 | 1% |
| Example 45 | Polyacrylic acid | 62.5% | 15000 | 1% |
| Example 46 | Polyacrylic acid | 62.5% | 50000 | 1% |
| Example 47 | Polyacrylic acid | 62.5% | 200000 | 1% |
| Example 48 | Polyacrylic acid | 62.5% | 250000 | 1% |
| Example 49 | Polyacrylic acid | 62.5% | 300000 | 1% |
| Example 50 | Polyacrylic acid | 62.5% | 400000 | 1% |

**Table 6**

| No. | Lattice change rate (%) | Li/Mn anti-site defect concentration (%) | Surfac e oxygen valenc e | Compaction density g/cm³ | Leachin g out of Mn and Fe after cycling (ppm) | Initial gram capacity of button battery mAh/g | 3C charging constant current ratio (%) | Number of cycles at capacity retention of 80% @45°C | Expansion rate of battery at 60°C storage (%) |
|---|---|---|---|---|---|---|---|---|---|
| Example 1 | 6.2 | 1.3 | -1.82 | 2.12 | 98 | 153.8 | 65.6 | 731 | 8.6 |
| Example 28 | 6.2 | 1.2 | -1.82 | 2.11 | 101 | 153.8 | 65.7 | 714 | 8.6 |
| Example 29 | 6.3 | 1.3 | -1.82 | 2.1 | 111 | 153.9 | 65.6 | 648 | 8.7 |
| Example 30 | 6.3 | 1.2 | -1.82 | 2.11 | 100 | 153.8 | 65.7 | 721 | 8.6 |
| Example 31 | 6.2 | 1.3 | -1.82 | 2.11 | 106 | 153.9 | 65.8 | 693 | 8.7 |
| Example 32 | 6.2 | 1.2 | -1.82 | 2.11 | 105 | 153.9 | 65.7 | 705 | 8.8 |
| Example 33 | 6.1 | 1.3 | -1.82 | 2.11 | 107 | 154.0 | 65.6 | 680 | 8.6 |
| Example 34 | 6.2 | 1.1 | -1.82 | 2.12 | 110 | 153.9 | 658.1 | 656 | 8.8 |
| Example 35 | 6.1 | 1.3 | -1.82 | 2.12 | 142 | 154.0 | 65.7 | 578 | 8.7 |
| Example 36 | 6.2 | 1.3 | -1.82 | 2.11 | 123 | 153.9 | 65.8 | 604 | 8.7 |
| Example 37 | 6.3 | 1.3 | -1.82 | 2.11 | 174 | 153.8 | 65.7 | 571 | 8.6 |
| Example 38 | 6.2 | 1.3 | -1.82 | 2.1 | 94 | 153.7 | 65.5 | 711 | 8.8 |
| Example 39 | 6.3 | 1.2 | -1.82 | 2.1 | 93 | 153.1 | 64.7 | 707 | 8.6 |
| Example 40 | 6.2 | 1.3 | -1.82 | 2.11 | 92 | 152.5 | 64.2 | 691 | 8.8 |
| Example 41 | 6.2 | 1.2 | -1.82 | 2.1 | 91 | 151.7 | 63.6 | 679 | 8.7 |
| Example 42 | 6.1 | 1.2 | -1.82 | 2.1 | 90 | 151.4 | 62.8 | 661 | 8.7 |
| Example 43 | 6.2 | 1.2 | -1.82 | 2.12 | 89 | 151.0 | 62.0 | 641 | 8.8 |
| Example 44 | 6.3 | 1.3 | -1.82 | 2.11 | 113 | 153.8 | 65.7 | 633 | 8.8 |
| Example 45 | 6.2 | 1.2 | -1.82 | 2.11 | 111 | 153.9 | 65.8 | 639 | 8.7 |
| Example 46 | 6.2 | 1.3 | -1.82 | 2.1 | 111 | 153.9 | 65.7 | 644 | 8.7 |
| Example 47 | 6.2 | 1.2 | -1.82 | 2.11 | 113 | 153.8 | 65.8 | 637 | 8.8 |
| Example 48 | 6.1 | 1.3 | -1.82 | 2.1 | 116 | 153.7 | 65.6 | 624 | 8.7 |
| Example 49 | 6.2 | 1.1 | -1.82 | 2.1 | 121 | 153.3 | 65.1 | 617 | 8.7 |
| Example 50 | 6.2 | 1.3 | -1.82 | 2.12 | 127 | 152.1 | 64.1 | 605 | 8.8 |

From Table 6 above, it can be seen that with the same other elements, the cycling performance of the secondary battery can further be improved by using a polymer that has one or more of the appropriate amount of electron withdrawing group, average molecular weight and the amount of cladding layer, without affecting energy density and kinetic performance.

It should be noted that this application is not limited to the above embodiments. The above embodiments are only provided as examples, and within the technical solution of the present application, embodiments having substantially the same configuration as the technical idea and exerting the same effects are all included within the technical scope of the present application. In addition, various modifications to the embodiments that can be conceived by those skilled in the art without departing from the scope of the spirit of the present application and other embodiments constructed by combining some constituent elements in the embodiments are also included in the scope of the present application.

## Claims

1. A positive electrode active material having a core-shell structure, comprising a core and a cladding layer covering at least a portion of said core,
wherein said core has a chemical formula of LiₐAₓMn_{1-y}B_{y}P_{1-z}C_{z}O₄₋ₙDₙ, said A comprises one or more elements selected from Zn, Al, Na, K, Mg, Nb, Mo and W, said B comprises one or more elements selected from Ti, V, Zr, Fe, Ni, Mg, Co, Ga, Sn, Sb, Nb, and Ge, said C comprises one or more elements selected from B (boron), S, Si, and N, said D comprises one or more elements selected from S, F, Cl, and Br, said a is in a range of 0.9 to 1.1, said x is in a range of 0.001 to 0.1, said y is in a range of 0.001 to 0.5, said z is in a range of 0.001 to 0.1, said n is in a range of 0.001 to 0.1, and said core is electrically neutral; and
said cladding layer comprises a polymer containing an electron withdrawing group.

2. The positive electrode active material according to claim 1, wherein the electron withdrawing group comprises one or more selected from halogen atoms, -CN, -COOH, -SO₃H, carboxylate groups, sulfonate groups, amide groups, sulfonyl groups, alkoxy groups, phosphoric acid groups, phosphorous acid groups, phosphate groups, and phosphite groups.

3. The positive electrode active material according to claim 2, wherein the polymer comprises a monomer unit shown in Formula 1 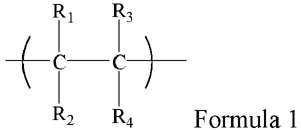
R₁, R₂, R₃, and R₄ each independently represent H, an electron withdrawing group, and an unsubstituted or an electron withdrawing group-substituted group selected from the group consisting of C1 to C20 alkyl, C1 to C20 alkoxy, C2 to C20 alkenyl, C2 to C20 alkynyl, and C6 to C20 aryl; and at least one of R₁, R₂, R₃, and R₄ represents an electron withdrawing group, or an electron withdrawing group-substituted group selected from the group consisting of C1 to C20 alkyl, C1 to C20 alkoxy, C2 to C20 alkenyl, C2 to C20 alkynyl, and C6 to C20 aryl,
optionally, the polymer comprises one or more of a homopolymer formed by one kind of monomer unit shown in Formula 1, a copolymer formed by at least two kinds of monomer units shown in Formula 1, and a copolymer formed by at least one kind of monomer unit shown in Formula 1 and at least one ethylenically unsaturated monomer unit; and optionally, said ethylenically unsaturated monomer unit comprises one or more of styrene, ethylene, propylene, and butadiene.

4. The positive electrode active material according to any one of claims 1 to 3, wherein the polymer comprises one or more selected from homopolymers or copolymers of acrylate monomers; polyacrylonitrile; polyacrylamide; copolymers of acrylate monomers and ethylenically unsaturated monomers; copolymers of acrylonitrile and ethylenically unsaturated monomers; copolymers of acrylamide and ethylenically unsaturated monomers; copolymers of acrylate monomers and acrylonitrile; copolymers of acrylate monomers and acrylamide; copolymers of acrylonitrile and acrylamide; copolymers of acrylate monomers, acrylonitrile and acrylamide; copolymers of acrylate monomers, acrylonitrile, acrylamide, and ethylenically unsaturated monomers; halogen-substituted polyolefin; polystyrene malonic acid; polystyrene phosphorous acid; poly(2-acrylamido-2-methyl-1-propanesulfonic acid); nitrile rubber; mercaptan resin; and polyacrylic acid mercaptan resin,
optionally, the acrylate monomer comprises one or more selected from acrylic acid, methacrylic acid, methyl acrylate, ethyl acrylate, methyl methacrylate, ethyl methacrylate, butyl methacrylate, and cyanoacrylate,
optionally, the halogen-substituted polyolefin comprises one or more selected from polyvinylidene fluoride, tetrafluoroethylene-ethylene copolymer, polyvinylidene chloride, and polychloromethylstyrene.

5. The positive electrode active material according to any one of claims 1 to 4, wherein the polymer has a number average molecular weight of 10,000 to 300,000, optionally of 15,000 to 250,000.

6. The positive electrode active material according to any one of claims 1 to 5, wherein the electron withdrawing group is present in a mass percentage α in said polymer, with α being from 20% to 70%, optionally from 35% to 65%.

7. The positive electrode active material according to any one of claims 1 to 6, wherein the cladding layer is present in an amount of greater than 0 wt% and less than or equal to 15 wt%, optionally greater than 0 wt% and less than or equal to 8 wt%, more optionally greater than 0 wt% and less than or equal to 3 wt%, based on the weight of said core.

8. The positive electrode active material according to any one of claims 1 to 7, wherein the cladding layer has a coverage of 60% to 100%, optionally 70% to 85%, on the surface of said core.

9. The positive electrode active material according to any one of claims 1 to 8, wherein each of said A, C and D is independently any one element in the above-mentioned respective range, and said B is at least two elements in its range;
optionally,
said A is any one element selected from Mg and Nb, and/or
said B is at least two elements selected from Fe, Ti, V, Co and Mg, further optionally being a combination of Fe with one or more element selected from Ti, V, Co and Mg, and/or
said C is S, and/or
said D is F.

10. The positive electrode active material according to any one of claims 1 to 9, wherein the x is selected from a range of 0.001 to 0.005; and/or the y is selected from a range of 0.01 to 0.5, optionally from a range of 0.25 to 0.5; and/or the z is selected from a range of 0.001 to 0.005; and/or the n is selected from a range of 0.001 to 0.005.

11. The positive electrode active material according to any one of claims 1 to 10, wherein a ratio of (1-y):y is in a range of 1 to 4, optionally in a range of 1.5 to 3, and a ratio of a:x is in a range of 9 to 1100, optionally in a range of 190 to 998.

12. The positive electrode active material according to any one of claims 1 to 11, wherein the positive electrode active material satisfies at least one of the following (1) to (4):
(1) the positive electrode active material has a lattice change rate of 8% or less, optionally 4% or less;
(2) the positive electrode active material has a Li/Mn anti-site defect concentration of 2% or less, optionally 0.5% or less;
(3) the positive electrode active material has a surface oxygen valence of -1.82 or less, optionally -1.89 to -1.98; and
(4) the positive electrode active material has a compaction density of 2.0 g/cm³ or more, optionally 2.2 g/cm³ or more, at 3T.

13. A method for preparing a positive electrode active material, comprising
Step (1), dissolving a manganese source, a source of element B and an acid in a solvent and stirring to produce a suspension of a manganese salt doped with element B, filtering the suspension and drying the resulting filter cake to obtain the manganese salt doped with element B;
Step (2), adding a lithium source, a phosphorus source, a source of element A, a source of element C and a source of element D, a solvent and the manganese salt doped with element B obtained from step (1) to a reaction vessel for grinding and mixing to obtain a slurry;
Step (3), transferring the slurry obtained from step (2) to a spray drying equipment for spray drying and granulating to obtain granules;
Step (4), sintering the granules obtained from step (3) to obtain a core;
Step (5), mixing the core obtained from step (4) with a solution of a polymer containing an electron withdrawing group homogeneously and then drying to obtain the positive electrode active material,
wherein the positive electrode active material has a core-shell structure, comprising a core and a cladding layer covering at least a portion of said core,
said core has a chemical formula of LiₐAₓMn_{1-y}B_{y}P_{1-z}C_{z}O₄₋ₙDₙ, said A comprises one or more elements selected from Zn, Al, Na, K, Mg, Nb, Mo and W, said B comprises one or more elements selected from Ti, V, Zr, Fe, Ni, Mg, Co, Ga, Sn, Sb, Nb, and Ge, said C comprises one or more elements selected from B (boron), S, Si, and N, said D comprises one or more elements selected from S, F, Cl, and Br, said a is in a range of 0.9 to 1.1, said x is in a range of 0.001 to 0.1, said y is in a range of 0.001 to 0.5, said z is in a range of 0.001 to 0.1, said n is in a range of 0.001 to 0.1, and said core is electrically neutral; and
said cladding layer comprises the polymer containing an electron withdrawing group.

14. The method according to claim 13, wherein
the source of element A is at least one selected from elemental substance, oxides, phosphates, oxalates, carbonates and sulfates of element A,
the source of element B is at least one selected from elemental substance, oxides, phosphates, oxalates, carbonates and sulfates of element B,
the source of element C is at least one selected from sulfates, borates, nitrates and silicates of element C, and
the source of element D is at least one selected from elemental substance and ammonium salts of element D.

15. The method according to claim 13 or 14, wherein the stirring in said step (1) is carried out at a temperature in a range of 60-120°C, and/or
the stirring in said step (1) is carried out by stirring at a rate of 200-800 rpm.

16. The method according to any one of claims 13 to 15, wherein grinding and mixing in said step (2) are carried out for 8-15 hours.

17. The method according to any one of claims 13 to 16, wherein the sintering in said step (4) is carried out at a temperature in a range of 600-900°C for 6-14 hours.

18. A positive electrode plate comprising a positive electrode current collector and a positive electrode film provided on at least one surface of the positive electrode current collector, wherein said positive electrode film comprises the positive electrode active material according to any one of claims 1 to 12 or the positive electrode active material prepared by the process according to any one of claims 13 to 17, and said positive electrode active material is present in said positive electrode film layer in a content of 10 wt% or more, optionally in a content of 95-99.5 wt%, based on total weight of said positive electrode film.

19. A secondary battery comprising the positive electrode active material according to any one of claims 1 to 12, or the positive electrode active material prepared by the method according to any one of claims 13 to 17, or the positive electrode plate according to claim 18.

20. An electrical device comprising the secondary battery according to claim 19.
